(19) Europäisches Patentamt
European Patent Office
Office européen des brevets

(11) **EP 2 214 116 A2**

(12) **EUROPEAN PATENT APPLICATION**

(43) Date of publication:
04.08.2010 Bulletin 2010/31

(51) Int Cl.:
*G06F 21/00* (2006.01)     *G06Q 30/00* (2006.01)

(21) Application number: 10152348.8

(22) Date of filing: 02.02.2010

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **02.02.2009 KR 20090008130**<br><br>(71) Applicant: **Samsung Electronics Co., Ltd**<br>**Suwon-si, Gyeonggi-do (KR)** | (72) Inventors:<br>• **Bang, Seong Hun**<br>**Suwon-si, Gyeonggi-do (KR)**<br>• **Lee, Kyung Keun**<br>**Suwon-si, Gyeonggi-do (KR)**<br>• **Lee, Byung Rae**<br>**Suwon-si, Gyeonggi-do (KR)**<br><br>(74) Representative: **Ketelaars, Maarten F.J.M.**<br>**Nederlandsch Octrooibureau**<br>**J.W. Frisolaan 13**<br>**2517 JS  Den Haag (NL)** |

(54) **System and method for configuring content object**

(57)     A digital content distribution method and system for delivering a content package including a Digital Rights Management (DRM) content and an advertisement content which is played to generate a license for playing the DRM content is disclosed. The content object format of the present invention includes a target content object; a pilot content object containing specific advertisement data; and a header indicating locations of the target content object and the pilot content object.

FIG . 1

EP 2 214 116 A2

**Description**

Background of the Invention

Field of the Invention

The present invention relates to the field of Digital Rights Management (DRM) and, in particular, to a method and system capable of delivering a content to generate a license for playing DRM content.

Description of the Related Art

Digital Rights Management (DRM) is an access control technology to protect against the illegal use of intellectual property contained within digital content. The DRM technology locks the digital content contained in such media as documents, MP3 files, ringtones, videos, and games by using a specific encryption algorithm.

Typically, a DRM protected content (hereinafter called DRM content) is distributed freely but can be consumed by the authorized users having a valid decryption key. That is, the user authorized by a license, referred to as a Rights Object (RO), can consume the corresponding DRM content, thereby preventing illegal use or consumption of the content.

The RO is issued by a Rights Issuer (RI) and purchased by the end user. The RO can be stored separately in a mobile terminal to restrict the execution of the corresponding DRM content. By storing the RO corresponding to the DRM content separately, it is possible to restrict the execution of the DRM content. An RO is a collection of permissions and constraints defining under which circumstances access is granted to a DRM content. The constraints are associated with one permission element at a time and include a 'count' element, an 'interval' element, a 'timed-count' element, an 'accumulate' element, and so on.

These constraints provide the fine-grained consumption control of content to enhance permission for accessing the content and are included in specific fields of the RO. For instance, if an RO corresponding to a MP3 file contains the 'play' permission with the 'count' constraint set to 10, the count is decremented by 1 immediately upon play. If the count reaches 0, the MP3 file cannot be played until a new RO is repurchased or recharged (i.e., the count is increased).

Accordingly, the user must pay for the consumption of the corresponding DRM content. This means that the user has to purchase or update the RO to consume the corresponding DRM content whenever the permission is exhausted. However, the purchase cost is likely to be felt burdensome to the users, resulting in shrinking the use of DRM content.

Summary of the Invention

The present invention provides a method and system for distributing DRM content that is capable of promoting the use of the DRM content.

Also, the present invention provides a method and system for distributing DRM content that is capable of reducing the cost burden of the user.

The present invention also provides a method and system for distributing DRM content that is capable of acquiring the right to consume a DRM content by consuming a pilot content carried along with the DRM content in a package content.

The present invention also provides a method and system for distributing DRM content that is capable of providing advertisement-based content service using an improved content object format and promoting the use of the DRM content.

Furthermore, the present invention provides a method and system for distributing DRM content that is capable of facilitating distribution of a package content including a pilot content and a target content by configuring a Content Packaging Mechanism (CPM) header providing meta information of the pilot content.

In accordance with an exemplary embodiment of the present invention, a content object format configuration system includes a target content object; a pilot content object containing specific advertisement data; and a header indicating locations of the target content object and the pilot content object.

In accordance with another exemplary embodiment of the present invention, a package content configuration method for carrying at least one content object includes forming a package content containing a target content object and a pilot content object having a specific advertisement data; and adding a header indicating positions of the target content object and the pilot content object according to a package content format type.

In accordance with another exemplary embodiment of the present invention, a content playback method of a mobile terminal includes checking, when a content playback request for playing a content is detected, whether a header indicating a pilot content object exists in the content; playing, when a header indicating a pilot content object exists in the content, the pilot content object according to a information on the pilot content object, the information being included in a header; and playing a target content object using a license generated while playing the pilot content object.

Preferably, the target content object and the pilot content object are configured in a multipart DCF, the target content object is included in a content region of a first part (first DCF) of the multipart DCF, the pilot content object is included in a content region of a second part (second DCF) of the multipart DCF, and the header is included in the first DCF.

Preferably, the pilot content object is concatenated before and after the target content object in a content region of the DCF, and the header comprises offset information indicating a position of the pilot content object.

Preferably, forming a package content includes packaging the package content into a multipart Digital Rights Management Content Format (DCF); placing the target content object in a content region of a first part (first DCF) of the multipart DCF; placing the pilot content object in a content region of a second part (second DCF) of the multipart DCF; and inserting a pilot content identifier indicating the pilot content object into the header.

Preferably, forming the package content includes forming a box in an extended box of the package content; packaging the pilot content object in the extended box; and inserting information indicating the position of the pilot content object in the extended box.

Preferably, forming the package content includes adding a mutable information box following at least one DCF, the mutable information box; placing the pilot content object in the mutable information box; and inserting information indicating a position of the pilot content object into the header.


BRIEF DESCRIPTION OF THE DRAWINGS

The above features and advantages of the present invention will be more apparent from the following detailed description in conjunction with the accompanying drawings, in which:

FIG. 1 is a schematic diagram illustrating a package content distribution system according to an exemplary embodiment of the present invention;

FIG. 2 is a sequence diagram illustrating operations of a packaging server, a mobile terminal, and an RI of a package content distribution system according to an exemplary embodiment of the present invention;

FIG. 3 is a sequence diagram illustrating operations of an advertisement server, a packaging server, a mobile terminal, and an RI of a package content distribution system according to another exemplary embodiment of the present invention;

FIG. 4 is a flowchart illustrating a package content distribution method of the packaging server according to an exemplary embodiment of the present invention;

FIG. 5 is a flowchart illustrating a package content distribution method of the packaging server according to another exemplary embodiment of the present invention;

FIG. 6 is a flowchart a package content generation procedure of the package content distribution method of a packaging server according to an exemplary embodiment of the present invention;

FIG. 7 is a diagram illustrating a format of the package format for use in the package content distribution method according to an exemplary embodiment of the present invention;

FIG. 8 is a diagram illustrating a format of a package content according to an exemplary embodiment of the present invention;

FIG. 9 is a diagram illustrating a format of a package content according to another exemplary embodiment of the present invention;

FIG. 10 is a diagram illustrating a format of a package content according to another exemplary embodiment of the present invention;

FIG. 11 is a diagram illustrating a format of a package content according to still another exemplary embodiment of the present invention;

FIG. 12 is a diagram illustrating a principle for structuring the pilot content and encrypting the target content using the pilot content according to an exemplary embodiment of the present invention;

FIG. 13 is a flowchart illustrating a content acquisition procedure of a package content distribution method according to an exemplary embodiment of the present invention;

FIG. 14 is a flowchart illustrating a package content playback procedure of a package content distribution method according to an exemplary embodiment of the present invention;

FIG. 15 is a flowchart illustrating a pilot content decryption key generation procedure of a package content distribution method according to an exemplary embodiment of the present invention; and

FIG. 16 is a flowchart illustrating a package content playback procedure of a package content distribution method according to another exemplary embodiment of the present invention.

Detailed Description of the Invention

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The present invention proposes a method and system for creating DRM content. In an exemplary embodiment of the present invention, a package content composed of an advertisement content containing video/audio data and an intended DRM content a Content Packaging Mechanism (CPM) for creating the package content are proposed. In an exemplary embodiment of the present invention, the advertisement content encrypted to create an encryption key for a DRM content is called pilot content, and the DRM content encrypted by the pilot content is called target content.

In an exemplary embodiment of the present invention, the pilot content denotes an advertisement content encrypted in at least one data block to create a decryption key for decrypting the co-packaged target content. In an exemplary embodiment of the present invention, at least one pilot content and at least one target content grouped into a file is called package content.

In an exemplary embodiment of the present invention, a package content server creates a package content containing at least one pilot content and at least one target content and provides a mobile terminal with the package content, and the mobile terminal acquires a decryption key to play the target content by playing the pilot content in the package content. Accordingly, the user can consume the intended target content for free only with the playback of the pilot content co-packaged with the target content in the package content.

That is, the user can acquire the decryption key of the target content by playing the advertisement content as the pilot content. As a reward for watching or listening to, the advertisement contained the pilot content the user can acquire the license to consume the co-packaged DRM content. The package content is advantageous to save the license purchase cost from the user's viewpoint and to provide the user and the advertiser with new business model from the service provider's viewpoint. With these advantages, the package content service can promote the use of the DRM contents and rev up the DRM contents business.

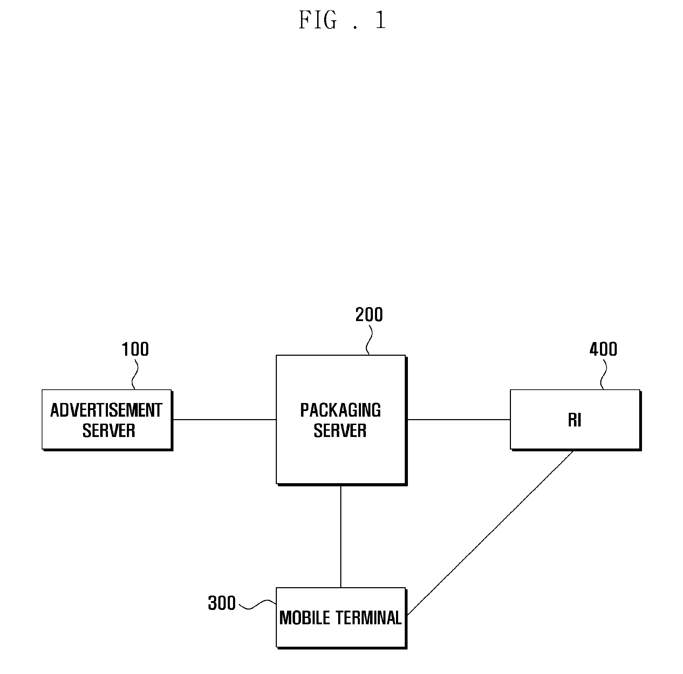

The structure and operations of the package content distribution system according to an exemplary embodiment of the present invention are described with reference to FIGs. 1 to 3.

FIG. 1 is a schematic diagram illustrating a package content distribution system according to an exemplary embodiment of the present invention.

Referring to FIG. 1, the package content distribution system according to an exemplary embodiment of the present invention includes an advertisement server 100, a packing server 200, a mobile terminal 300, and a Rights Issuer (RI) 400.

The advertisement server 100 is a server which provides advertisement contents including at least one of audio data (e.g. voice advertisement), audio/video data (e.g. video advertisement), text data (e.g. text advertisement). The advertisement server 100 stores at least one advertisement content and registers the at least one advertisement content with the packaging server 200.

The packaging server 200 stores normal content, advertisement content, and pilot content created by encrypting the advertisement content, DRM protected content, target content, and package content created by the pilot content and the target content in the form of a database (DB). The packaging server 200 provides the content requested by a mobile terminal. The packaging server 200 also can store the licenses corresponding to the package content and request the RI 400 to issue a license for a package content.

The packaging server 200 is interworking to receive the advertisement content and creates the pilot content by encrypting the advertisement content and stores the pilot content. The packaging server 200 also can create an encryption key for the target content using the pilot content and encrypt the target content using the encryption key.

The packaging server 200 can store and transmit a previously created package content in response to the request from the mobile terminal 300, or creates the packet content by packaging the pilot content and target content and transmit the packet content in response to the request from the mobile terminal 300. In an exemplary embodiment of the present invention, the package content is protected by DRM technology. The DRM protected content in the package content is encrypted with an encryption key and stored in an encrypted format.

The packaging server 200 can create the package content by inserting a decryption key of the pilot content into the license for playing the pilot content. The packaging server 200 requests the RI 400 to issue the license for the pilot content packaged in the package content to be transmitted to the mobile terminal 300 and transmit the license to the mobile terminal. The packaging server 200 also can consign the right for the license acquisition to the mobile terminal 300 when it transmits the package content.

The mobile terminal 300 accesses the packaging server 200 to request the content desired by the user. At this time, the content can be the package content, the advertisement content, the target content (DRM content) or the normal content.

Particularly in an exemplary embodiment of the present invention, the mobile terminal 300 parses the header of the package content and determines whether the header includes a Content Packaging Mechanism (CPM) header and, if the CPM header is included, performs a process to acquire the decryption key to decrypt the target content. The header of the package content can be a common header of a DRM Content Format header of the DRM content. The CPM header and header format are described later in detail.

When it is requested to play the package content, the mobile terminal 300 plays the pilot content contained in the package content first. The mobile terminal 300 decodes the pilot content using the license of the package content.

At this time, while decrypting the pilot content, the mobile terminal 300 can acquire the decryption key for decoding the target content co-packaged in the package content. The mobile terminal 300 can play the target content of the package content by using the decryption key acquired while playing the pilot content.

The license (encryption key) of the pilot content can be acquired for free from the packaging server 200 or the RI 400.

The mobile terminal 300 can verify the validity of the decryption key before playing the target content using the acquired decryption key. That is, the mobile terminal 300 analyzes whether the decryption key is generated illegally, and determines the playback of the target content depending on the result. In case that the acquired decryption key is invalid, the mobile terminal 300 can analyze whether the invalidity is caused by the problem of the pilot content (e.g. data loss) or illegal behavior of the user. If the invalidity is caused by a problem with the pilot content, the mobile terminal can perform a pilot content recovery process. The pilot content recovery process can be a process to download a copy of the pilot content from the packaging server 200, for example.

The RI 400 is a server which manages the licenses of the pilot and target content. The license is a right object (RO) to grant the right to consume a content encrypted by means of the DRM technology and includes a decryption key for decoding the corresponding content and constraint information. The mobile terminal 300 can play the DRM protected content using the license (decryption key) specified in the DRM system.

The RI 400 authenticates the user of the mobile terminal 300 requesting the license and, if the user is determined to be an authorized user, issues a license for the DRM protected content (pilot content or DRM content) and transmits the license to the mobile terminal 300. The license contains the decryption key of the corresponding content and usage constraint information. In an exemplary embodiment of the present invention, the licenses can be classified as free license for playing the pilot content and a pay license for playing the target content (DRM content). Particularly in an exemplary embodiment of the present invention, the pay license for playing the target content can be substituted by the license generated by playing the pilot content.

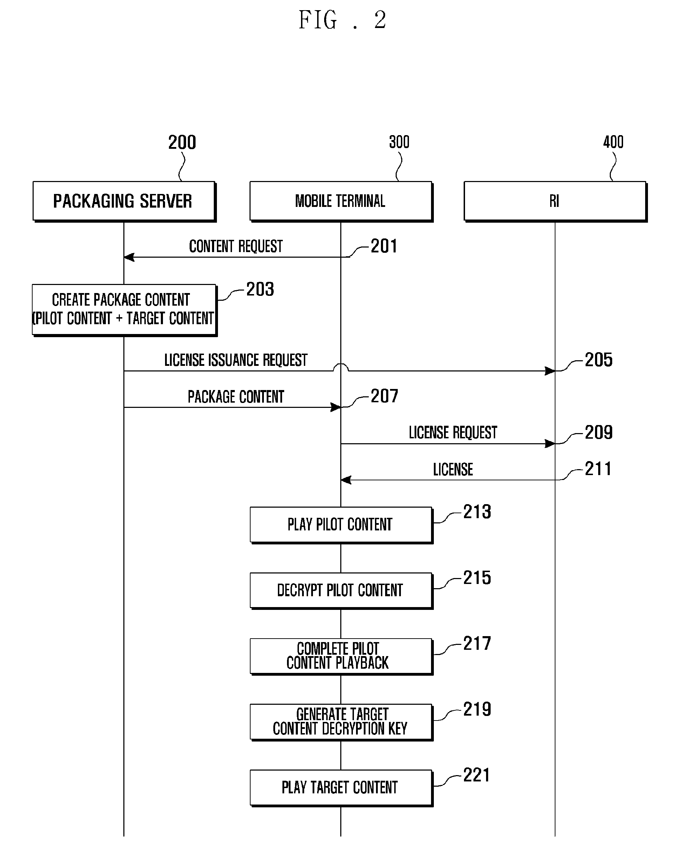

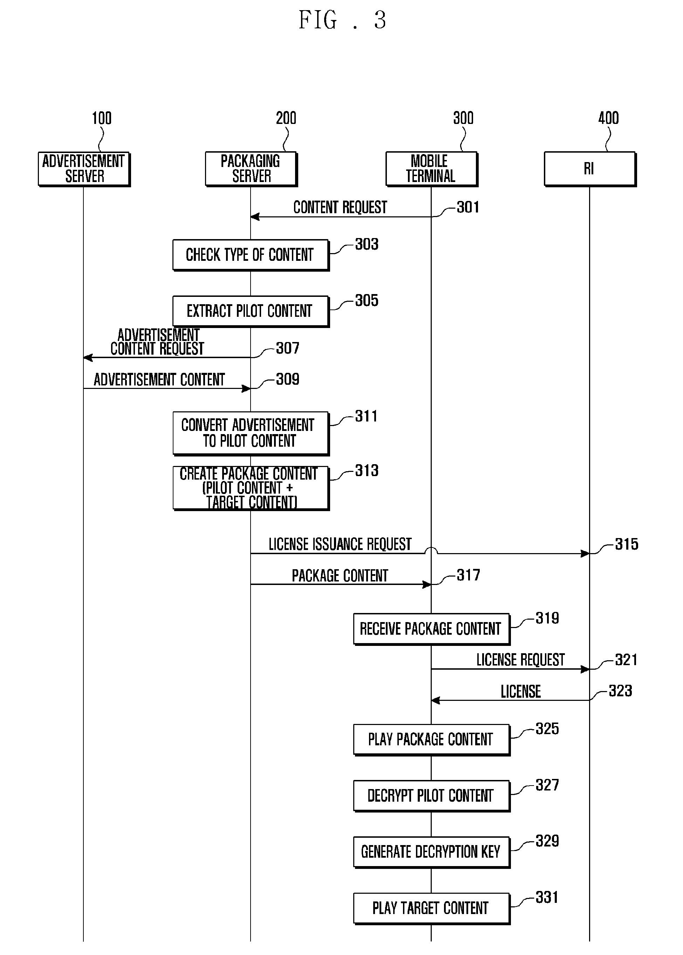

The structure and functions of the network entities constituting the package content distribution system according to an exemplary embodiment will be described schematically. The signaling among the advertisement server 100, the packaging server 200, the mobile terminal 300, and the RI 400 of the package content distribution system are described in detail with reference to FIGs. 2 and 3. However, the present invention is not limited to the following description but can be implemented in various other exemplary embodiments.

FIG. 2 is a sequence diagram illustrating operations of a packaging server 200, a mobile terminal 300, and an RI 400 of a package content distribution system according to an exemplary embodiment of the present invention.

Referring to FIGs. 1 and 2, the mobile terminal 300 accesses the packaging server 200 and requests the packaging server 200 for a package content in response to a user command (201). When the package content request message has been received, the packaging server 200 retrieves or creates the requested package content in response to the package content request (203).

At this time, the packaging server 200 can retrieve the requested package content, if it has been created and stored previously, and otherwise creates the package content by packaging the target content and a designated pilot content or by packaging the target content and a randomly selected pilot package.

The package content can be created in a CPM format based on the DRM content format according to an exemplary embodiment of the present invention. In short, the CPM format is a DRM format including a CPM header as will defined in an exemplary embodiment of the present invention. The package content can be formatted in one of two types of data format. The description on the CPM format is made later in detail.

While preparing the package content in response to the mobile terminal 300, the packaging server 200 can perform a conversion process, i.e. encryption process on the pilot content. A description on the encryption of the pilot content is made later in detail.

Once the package content has been prepared, the packaging server 200 sends a license issuance request message to request the RI 400 for issuance of the license corresponding to the pilot content packaged in the package content (205). When the license issuance request message has been received, the RI 400 creates a license for the pilot content and transmits the license to the mobile terminal 300 or waits for receiving a license request message depending on the system configuration. After transmitting the license issuance request message to the RI 400, the packaging server 200 sends the package content to the mobile terminal 300 (207).

If the package content has been received, the mobile terminal 300 sends a license request message to request the RI 400 transmit the license needed for playing the package content, i.e. the pilot content package in the package content (209). If the license request message has been received, the RI 400 sends the license issued for playing the pilot content to the mobile terminal 300 (211). The license contains the decryption key for decoding the pilot content packaged in the package content. The decryption key corresponds to the encryption key used for encrypting the pilot content.

Once the license for the pilot content has been received, the mobile terminal 300 plays the pilot content packaged in the package content using the license in response to a user command (213). At this time, the mobile terminal 300 decrypts the encrypted pilot content and also acquires the decryption key for playing the target content co-packaged in the package content by means of playing the pilot content.

That is, the mobile terminal 300 acquires and buffers the data blocks constituting the pilot content and partial keys partitioned by milestones allocated the data blocks (215).

The partial keys are temporary keys acquired from the milestones mapped to the data blocks constituting the pilot content and used for creating the decryption key for playing the target content. The number of partial keys acquired by means of playing the pilot content is identical with the number of data blocks (or milestones) constituting the pilot content. When the pilot content consists of n data blocks, n partial keys are extracted after the completion of the pilot content playback. This means that the n partial keys are extracted by decrypting the n data blocks constituting the pilot content. If the partial keys have been acquired as a result of the playback of the pilot content, the mobile terminal 300 can acquire the decryption key for decrypting the target content. The target content decryption key acquisition process is described later in detail.

The mobile terminal 300 completes the playback of the pilot content (217) and, as a consequence, acquires the decryption key for decrypting the target content using the partial keys extracted while playing the pilot content (219). The target content decryption key corresponds to the encryption key used for encryption of the target content, i.e. the encryption key created by encrypting the pilot content. The encryption key creations and decryption key generation procedures are described in detail later.

Finally, the mobile terminal 300 decodes the target content using the decryption key to play the target content (221).

Until now, the package content download and playback procedure according to an exemplary embodiment of the present invention has been described. A package content distribution procedure in which the package server 200 acquires an advertisement content from the advertisement server 100, encrypts a target content by means of the encryption of the pilot content, and transmit the package content containing the advertisement content with the target content is described in more detail with reference to FIG. 3.

FIG. 3 is a sequence diagram illustrating operations of an advertisement server, a packaging server, a mobile terminal, and an RI of a package content distribution system according to another exemplary embodiment of the present invention.

Referring to FIGs. 1 and 3, the mobile terminal 300 accesses the packaging server 200 and requests the packaging server 200 for a package content in response to a user command (301). If the package content request message has been received, the package server 200 configures the package content requested by the mobile terminal 300. That is, the package server 200 checks the package content requested by the mobile terminal 300 (303) and retrieves a pilot content registered in association with the package content (305).

If no pilot content registered in association with the package content requested by the mobile terminal 300 exists in the packaging server 200, the packaging server 200 sends an advertisement content request message to the advertisement server 100 to request the advertisement server 100 for the advertisement content to be used as a pilot content (307). Upon receipt of the advertisement content request message, the advertisement server 100 sends the corresponding advertisement content to the packaging server 200 (309).

If the advertisement content has been received from the advertisement server 100, the packaging server converts the advertisement content to the pilot content through an encrypting process (311). The encryption of the advertisement content can be processed with a randomly selected encryption key. The advertisement content encryption process is described later in detail. Although not depicted in FIG. 3, the packaging server 200 stores the advertisement content provided by the advertisement server 100 and the pilot content created by encrypting the advertisement content.

Once the pilot content has been prepared by encrypting the advertisement content received from the advertisement server 100, the packaging server creates the package content by packaging the pilot content and the target content requested by the mobile terminal 300 (313). The package content is created in the CPM format which is defined in an exemplary embodiment of the present invention as one of the DRM content formats. The CPM format is a DRM content format having an additional CPM header as defined in an exemplary embodiment of the present invention. The package content can be formatted in one of two data formats. Detailed description on the data formats is made later.

Once the package content has been prepared, the packaging server 200 sends a license issuance request message to the RI 400 to request the RI 400 to issue the license for the pilot content packaged in the package content (315). If the license issuance request message has been received from the packaging server 200, the RI 400 issues a license for playing the pilot content and sends the license to the mobile terminal 300 or waits for receiving a license request message from the mobile terminal.

After transmitting the license request message to the RI 400, the packaging server 200 sends the package content to the mobile terminal 300 (317).

The mobile terminal 300 receives the package content transmitted by the packaging server 200 (319) and sends a license request message to the RI 400 to request the RI 400 for transmitting the license issued for the pilot content packaged in the package content (321). If the license request message has been received, the RI 400 sends the license issued for playing the pilot content to the mobile terminal 300 (323). The license can be a free license for decrypting the pilot content into the advertisement content to be played. The license contains a decryption key corresponding to the encryption key used for encrypting the advertisement content provided by the advertisement server 100 to the pilot content.

Once the license for playback of the pilot content has been acquired, the mobile terminal 300 starts playing the package content in response to the user command (325). At this time, the mobile terminal 300 decrypts the pilot content packaged with the target content in the package content so as to play the advertisement content first (327). The mobile terminal 300 acquires the decryption key for playback of the target content by means of playing the pilot content (329).

That is, the mobile terminal 300 decodes the pilot content to play the advertisement content while extracting and buffering the data blocks constituting the pilot content and acquiring the partial keys from the milestones assigned to the data blocks at step 327. The description on the partial keys has been made with reference to FIG. 2.

Once the playback of the pilot content has been completed, the mobile terminal 300 acquires the encryption keys for playing the target content packaged in the package content using the partial keys obtained while decrypting the pilot content at step 329. The decryption key corresponds to the encryption key used by the packaging server 200 for encrypting the target content. The encryption key can be created by means of encrypting the pilot content. The encryption key creation and decryption acquisition procedures are described with exemplary embodiments of the present invention later.

Once the target content decryption key has been acquired, the mobile terminal 300 performs decryption on the target content using the decryption key to play the target content (331).

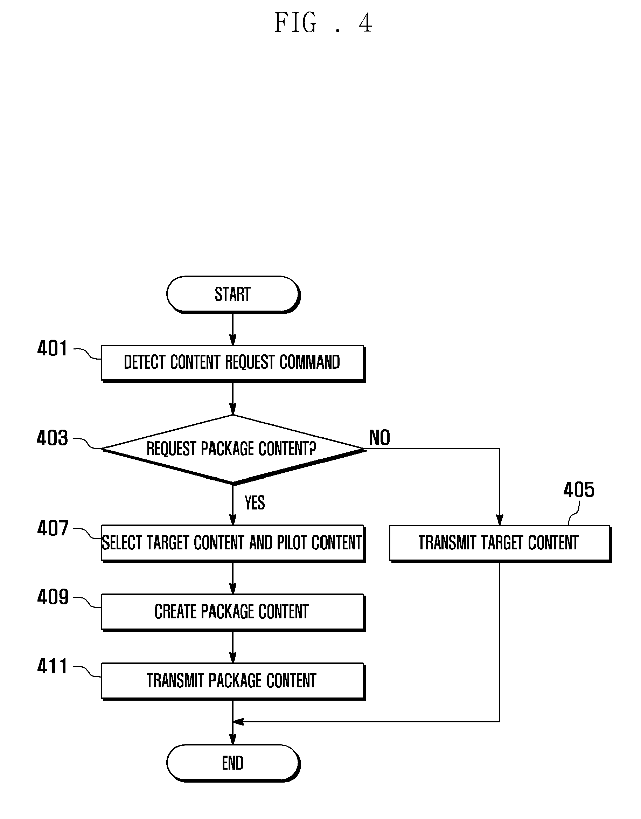

Until now, the package content download and playback procedure according to an exemplary embodiment of the present invention has been described. The operation of the packaging server 200 is described hereinafter in more detail with reference to FIGs. 4 to 12. The present invention is not limited to the following descriptions but can be implemented in various other exemplary embodiments.

FIG. 4 is a flowchart illustrating a package content distribution method of the packaging server according to an exemplary embodiment of the present invention. In the exemplary embodiment of FIG. 4, the advertisement content and the target content constituting a package content are selected by the user, and the packaging server 200 creates the package content using the advertisement content and the target content selected by the user.

Referring to FIGs. 1 and 4, the packaging server 200 receives a content request message transmitted by the mobile terminal 300 (401). Upon receipt of the content request message, the packaging server determines whether the content request message is a package content request message or a target content request message, i.e. a normal DRM content (403). Although not depicted in FIG. 4, the packaging server 200 can handle the normal content, i.e. non-DRM protected content, in response to a normal content request message.

If it has been determined that the content request message is a target content request message, the packaging server 200 sends the target content indicated by the target content request message (405). Otherwise, if it has been determined that the content request message is a package content request message, the packaging server 200 retrieves the pilot content and the target content indicated by the content request message (407) and creates a package content by packaging and encrypting the pilot and target contents (409). That is, the packaging server 200 creates the package content requested by the user.

Once the package content has been created, the packaging server 200 sends the package content to the mobile terminal 300 (411). After creating the package content, the packaging server 200 can send a license issuance request message (not shown) to the RI 400 to request for creating a license need for the mobile terminal to play the package content. How to format the package content to be transmitted is described later in detail.

In the exemplary embodiment of FIG. 4, the pilot content and the target content packaged in the package content are selected by the user. That is, the mobile terminal 300 transmits the content request message indicating the pilot content and the target content selected by the user to the packaging server 200 such that the package server 200 generates a package content containing the pilot and target contents indicated by the content request message. Accordingly, the packaging server 200 can be configured to retrieve the package content indicated by the package content request message transmitted by the mobile terminal 300 and transmit the retrieved package content to the mobile terminal 300.

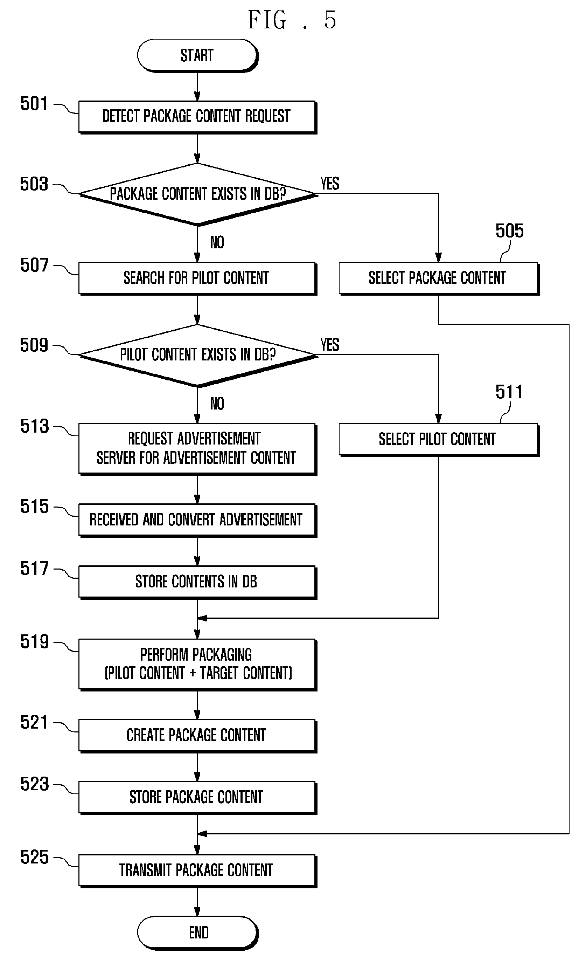

FIG. 5 is a flowchart illustrating a package content distribution method of the packaging server according to another exemplary embodiment of the present invention. In the exemplary embodiment of FIG. 5, the advertisement server 100 provides the packaging server 200 with the advertisement content such that the packaging server 200 encrypts the advertisement content into a pilot content and creates a package content containing the advertisement and a target content.

Referring to FIGs. 1 and 5, the packaging server 200 receives a content request message transmitted by the mobile terminal 300 (501). Upon receipt of the content request message, the packaging server 200 searches a database for a match to the package content indicated by the content request message (503). Here, the content request message can be configured to indicate a target content, and the target content can be delivered in the form of a package content containing the target content.

If a match to the package content has been found at step 503, the packaging server 200 retrieves the package content (505) and sends the retrieved package content to the mobile terminal 300 (525).

Otherwise, if no match to the package content has been found at step 503, the packaging server 200 searches the database for a pilot content associated with the target content requested by the mobile terminal 300 (507) and determines whether the pilot content exists in the database (509).

If it has been determined that there is a match to the pilot content in the database, the packaging server 200 retrieves the pilot content (511) and creates the package content by packaging the pilot content and the target content (519). In the package process, the packaging server 200 generates a target content encryption key using the pilot content and encrypts the target content using the target content encryption key. The target content encryption procedure is described later in detail.

If it has been determined that there is no match to the pilot content in the database at step 509, the packaging server 200 sends an advertisement request message to the advertisement server 100 to request the advertisement server 100 for the advertisement content for use as the pilot content (513). Next, the packaging server 200 receives the advertisement content transmitted by the advertisement server 100 and converts the advertisement content to the pilot content (515). The pilot content is obtained by encrypting the advertisement content with a randomly generated encryption key. The advertisement content encryption procedure is described later in detail. The package server 200 stores the advertisement content and the pilot content obtained by encrypting the advertisement content in the database (517).

Next, the packaging server 200 packages the pilot content and the target content (519). That is, the packaging server 200 combines the pilot content and the target content and encrypts the combined pilot and target contents. Next, the packaging server 200 creates the package content (521) and stores the package content in the database (523). Finally, the packaging server 200 sends the created package content to the mobile terminal 300 (525). After creating the package content, the packaging server 200 can send a license issuance request message (not shown) to the RI 400 to request the RI 400 for issuance of a license for playing the pilot content.

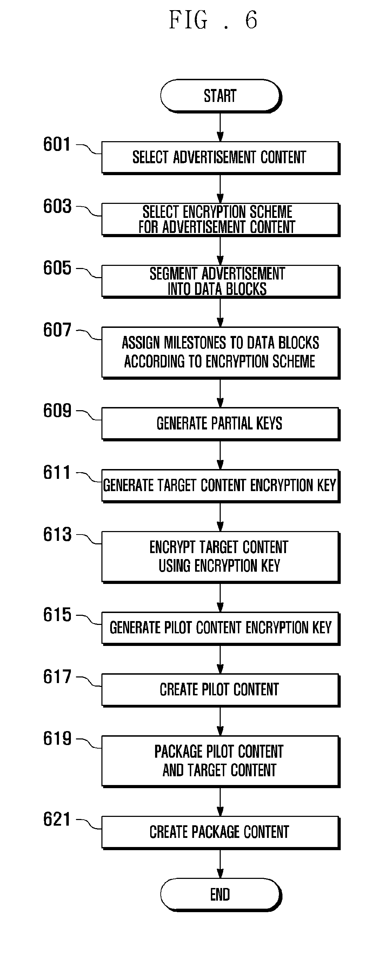

FIG. 6 is a flowchart a package content generation procedure of the package content distribution method of a packaging server according to an exemplary embodiment of the present invention. In FIG. 6, the package content generation procedure is focused on the process for encrypting the target content using the encryption key generated using the pilot content.

Referring to FIGs. 1 and 6, the packaging server 200 selects an advertisement content to be packaged in the package content (601). The advertisement content can be a pilot content encrypted according to an exemplary embodiment of the present invention or a raw advertisement content which did not be encrypted. The advertisement content also can be a content stored in the database of the packaging server or the content service received from the advertisement server 100. The advertisement content can be a content selected by the user or a content selected randomly at the packaging server 200.

Once the advertisement content has been selected, the packaging server 200 determines an encryption scheme for encrypting the advertisement content (603). In an exemplary embodiment of the present invention two encryption schemes can be used. The mobile terminal 300 can acquire the decryption key for playing the target content by means of playing the pilot content entirely or partially depending on the encryption scheme used at the packaging server 200. That is, the user can acquire the target content decryption key by watching the advertisement content entirely or partially.

How to permit the playback of the target content depends on encryption/decryption scheme, i.e. all or nothing scheme which permits playback of the target content when the entire pilot content has been played or threshold scheme which permits the playback of the target content when the pilot content has been played greater than a threshold amount.

The all or nothing scheme enables the target content decryption key to be created when the entire pilot content packaged with the target content has been played completely. The threshold scheme enables the target content decryption key to be created when the pilot content packaged with the target content has been played greater than the threshold amount. For instance, if the pilot content consists of n data blocks, the target content decryption key is created when t data blocks of the n data blocks ($n \geq t$) have been played. Descriptions regarding the all or nothing scheme and the threshold scheme are made later in more detail.

Once the encryption scheme has been determined at step 603, the packaging server 200 segments the advertisement content into data blocks (605). That is, the packaging server 200 segments the advertisement into a predetermined number of data blocks (e.g. n data blocks, where n is natural value).

Next, the packaging server 200 assigns the milestones to the individual data blocks of the advertisement content according to the encryption scheme (607). The milestones are included within the pilot content as supplementary information to prevent the user from doing a protected defeating manipulation, e.g., fast forward manipulation.

Next, the packaging server 200 creates partial keys for the milestones assigned to the respective data blocks (609). Sequentially, the packaging server 200 generates a first encryption key for the target content based on the partial keys (611) and then encrypts the target content using the first encryption key (613). That is, the packaging server 200 encrypts the user intended DRM content with the first encryption key to generate the target content packaged in the package content.

Once the target content has been created, the packaging server 200 creates a second encryption key to encrypt the advertisement content (615). Next, the packaging server 200 generates the pilot content by encrypting the advertisement content using the second encryption key (617).

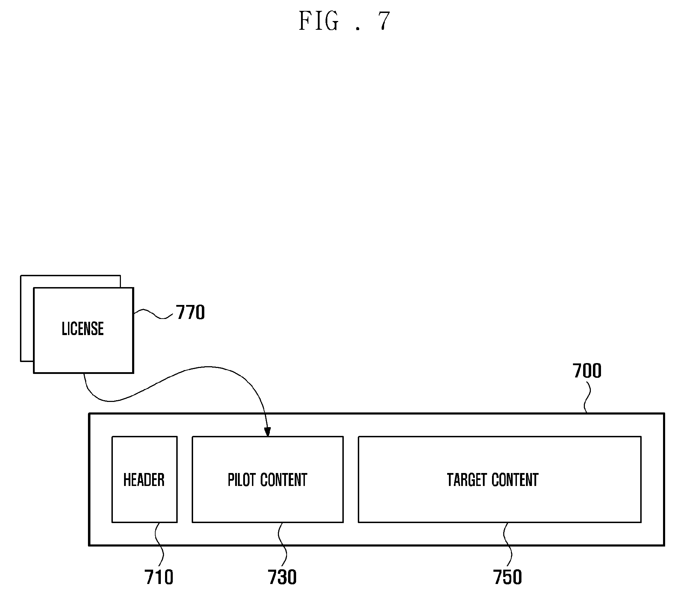

Next, the packaging server 200 packages the pilot content and the target content (619) and then creates a package content (621). The package content is formatted as shown in FIGs. 7 to 10.

FIG. 7 is a diagram illustrating a format of the package format for use in the package content distribution method according to an exemplary embodiment of the present invention.

Referring to FIG. 7, a package content 700 according to an exemplary embodiment of the present invention includes a header 710, a pilot content object 730, and a target content object 750.

The header 710 includes a common header and a Content Packaging Mechanism header. The CPM header can be included in the common header. The detailed structure of the header 710 is described later in detail. The header 710 has the information indicating that the content is a package content. The packaging server 200 forms a package content format including the pilot content object, the target content object, and the common header in which the CPM header is inserted.

If a content has been received, the mobile terminal 300 checks whether the CPM header exists in the common header and processes the content depending on whether the CPM header exists or not. The header 710 also includes an encryption scheme field, which indicates whether the content is encrypted by using the all or nothing scheme or the threshold scheme, and position information indicating the position of the pilot content object 750 in the content format 700.

The header 710 also includes the information regarding the playing of the pilot content first when the package content playback is requested and the information on the address of the server (e.g. the packaging server and RI) providing the license 770 needed for playing the pilot content object 730. The address information can be Uniform Resource Locations (URLs). The mobile terminal can select one of the addresses of the servers and accesses the server corresponding to the selected URL by means of a web browser to acquire the license (decryption key) 770 of the pilot content 730.

The pilot content 730 is decrypted using the decryption key 770 contained in a free license. The target content 750 is decrypted using a decryption key created by means of playing the pilot content 730.

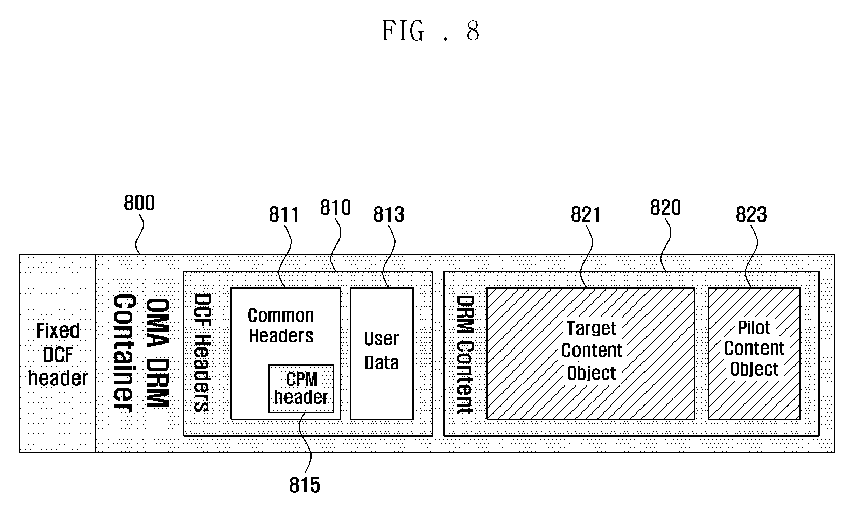

The available structures of the package content formatted by the Content Packaging Mechanism (CPM) are described hereinafter in more detail with reference to FIGs. 8 to 11.

To begin with, description on the basic DRM content formats specified in the standard is described schematically. The structures of the DRM Content Format (DCF) specified in the OMA DRMv1.0 (hereinafter called DRMv1.0 DCF) and the DCF specified in the OMA DRMv.2.x (hereinafter called DRMv2.x DCF) are described first, and then the content object format is described.

The DRMv1.0 DCF uses three DRM methods: Forward-lock, Combined delivery, and Separate delivery.

The Forward-lock method and Combined delivery method are downloaded in the form of a DRM message by means of Hypertext Transfer protocol (HTTP) and are not encrypted.

The Separate delivery method is downloaded in the form of a DCF by means of the HTTP, and the RO (license) is delivered to the mobile terminal 300 in the form of extensible Markup Language (XML) or WAP Binary XML (wbxml) by means of Wireless Application Protocol (WAP) Push. Here, the DCF of the Separate delivery method consists of the information fields as shown in table 1.

Table 1

| Field name | Type | Purpose |
|---|---|---|
| Version | Uint8 | Version number |
| ContentTypeLen | Uint8 | Length of the Content Type field |
| ContentURILen | Uint8 | Length of the Content URI field |
| ContentType | ContentTypeLen otects | The MIME media type of the plaintext data |

9

(continued)

| Field name | Type | Purpose |
|---|---|---|
| HeadersURI | ContentURILen otects | The unique identifier of this content object |
| HeaderLen | Uintvar | Length of the Headers field |
| DataLen | Uintvar | Length of the Data field |
| Headers | HeaderLen otects | Headers define additional meta data about this content object |
| Data | DataLen otects | The encrypted data |

In table 1, the 'Headers' field contains headers defining additional meta data about the content, and the headers are represented by name value pairs and encoded using textual encoding. The 'Headers' field includes an Encryption-Method header, a Rights-Issuer header, a Content-Name header, a Content0Description header, a Content-Vender header, an Icon-URI header, and Unsupported headers. The Unsupported headers can be used for additional headers to extend the DCF.

The DRMv2.x DCF defines the Discrete Media format based on the type of the ISO Base Media File Format [ISO 14492-12]. The ISO Base Media File format is structured around an object-oriented design of boxes. A basic box has two mandatory fields, size and type. The size is an offset from the start to the end of a box, and the type is an identifier to bind the box and composed of bytes (e.g. 4 bytes (Four Character Code)). The DRMv2.x DCF also can use a FullBox having a version field and a flags field for extension.

The DRMv2.x DCF supports two DRM Content Format profiles: DCF and PDCF. The DCF is used to package and protect Discrete Media (such as ring tones, applications, images, etc.) and supports per-content encryption. The PDCF is used to protect Continuous Media (such as audio and video) and supports per-packet encryption.

In the DRMv2.x DCF, a content object is contained in a single Container Box, and a DCF file can include one or more container boxes. The DCF file containing multiple container boxes is called Multipart DCF. The container box is defined as shown in table 2.

Table 2

```
aligned(8) class OMADRMContainer extends FullBox('odrm', version, 0) {

        OMADRMDiscreteHeaders ContentHeaders; // Headers for Discrete Media DCF

        OMADRMContentObject DRMContent;        // Actual encrypted content

        Box Extensions[];                       // Extensions, to the end of the box

}
```

As shown in table 2, the container box includes a single 'OMA DRM Description Headers' box containing the meta information of the corresponding content object, a single 'OMA DRM Content Object' box containing the encrypted content object, and an 'Extensions' reserved for new additional boxes.

The 'OMA DRM Discrete Headers' box includes a 'Common Headers' box as shown in table 3 for containing the metadata information about the corresponding content object. The 'OMA DRM Content Object' box contains the encrypted content object obtained by encrypting the entire corresponding content object as shown in table 4.

Table 3

```
aligned(8) class OMADRMDiscreteHeaders extends FullBox('odhe', version, flags) {

        unsigned int(8)        ContentTypeLength;        // Content Type Length

        char                   ContentType[];            // Content Type String

        OMADRMCommonHeaders CommonHeaders;        // Common headers (same

as with PDCF)
```

```
        if(flags & 0x000001) {

                UserDataBox  UserData;                // ISO User Data Box

(optional)

        }

}
```

Table 4

```
aligned(8) class OMADRMContentObject extends FullBox('odda', version, 0) {

        unsigned int(64)   OMADRMDataLength;   // Length of the encrypted

content

        byte               OMADRMData[];           // Encrypted content

}
```

In the above structured DRMv2.x DCF, the Common Headers defines a structure for the required headers.
The DCF and PDCF can include the Common Header and inherits the FullBox as shown in table 5.

## Table 5

```
aligned(8) class OMADRMCommonHeaders extends FullBox('ohdr', version, 0) {

        unsigned int(8)      EncryptionMethod;      // Encryption method

        unsigned int(8)       PaddingScheme;        // Padding type

        unsigned int(64)      PlaintextLength;       // Plaintext content length
(bytes)
```

```
        unsigned int(16)     ContentIDLength;      // Length of ContentID field
(bytes)

        unsigned int(16)     RightsIssuerURLLength;  // Rights Issuer URL field length
(bytes)

        unsigned int(16)      TextualHeadersLength;   // Length of the TextualHeaders
array (bytes)

        char                 ContentID[];            // Content ID string

        char                 RightsIssuerURL[];       // Rights Issuer URL string

        string               TextualHeaders[];        // Additional headers as
Name:Value pairs

        Box                  ExtendedHeaders[];       // Extended headers boxes

}
```

As shown in table 5, the 'Common Headers' box includes an Encryption Method field, an Encryption padding field, a Plaintext Length field, a Content ID and Length field, a Rights Issuer (RI) URL and Length field, a Textural Header and Length field, and an Extended Headers field. Particularly, the Textual Header field is represented by name value pairs and encoded using textual encoding as the Headers field of the DRMv1.0 DCF and can contain the Content-Location header and the Custom headers. Accordingly, the header extension is possible by using the Custom Headers of the Textual Headers box and by inserting a new header into the Extended headers field.

On the basis of knowledge on the above described conventional DRM DCF, the content object format introduced in the present invention, i.e. the CPM header added to the packaging format and common header is now described.

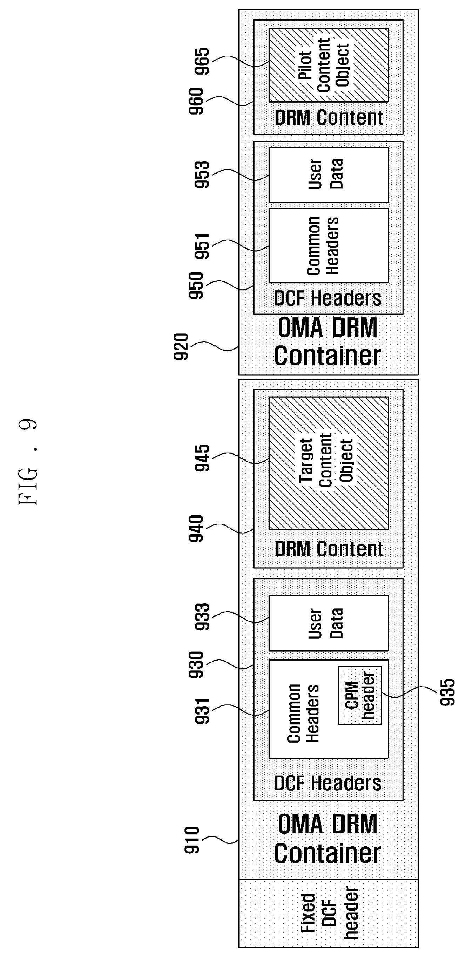

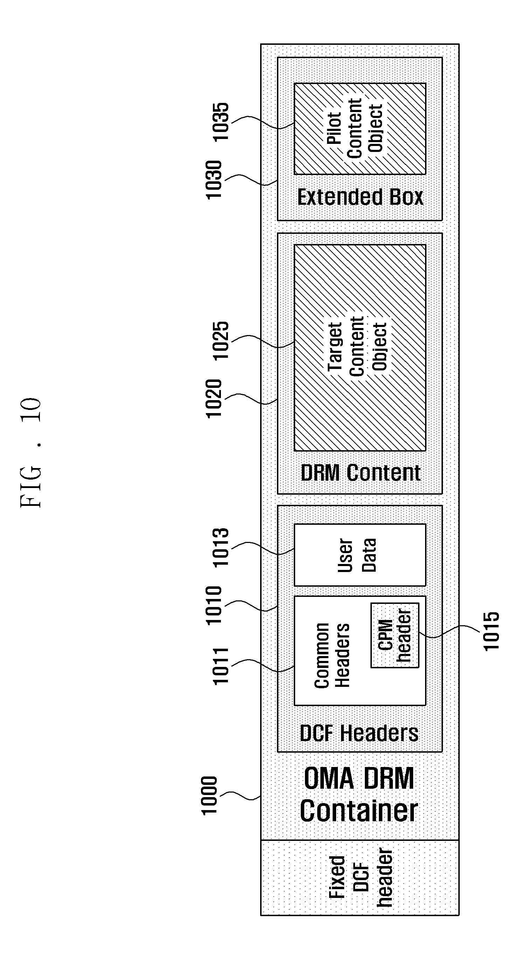

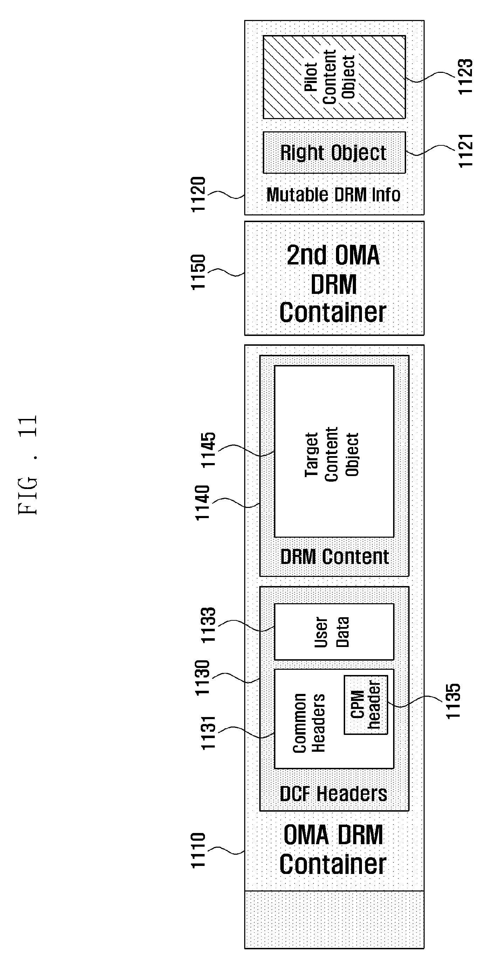

The content object format according to an exemplary embodiment of the present invention is established by adding a new header, i.e. the CPM header, to the conventional DCF while maintaining the DRM format. Particularly in the content object format according to an exemplary embodiment of the present invention, the pilot content object 730 can be established considering the offset information of the DRMv1.0 DCF (FIG. 8) or based on the extensionality of the DRMv2.x DCF (FIGs. 9 to 11). The DRMv2.x DCF extensionality-based pilot content object configuration method can be implemented with the Multipart DCF (FIG. 9), OMA DRM container box (FIG. 10), and editable space of mutable DRM information (FIG. 11).

FIG. 8 is a diagram illustrating a format of a package content according to an exemplary embodiment of the present invention.

In the exemplary embodiment of FIG. 8, the content objects, i.e. the pilot content object and the target content object, are packaged into a package content using the offset information.

Referring to FIG. 8, the package content format using the offset information according to an exemplary embodiment of the present invention includes a single container box 800 having a DCF headers box 810 and a DRM content box 820. The DCF headers box 810 includes a common headers box 811 and a user data box 813, and the DRM content box 820 includes a target content object 821 and a pilot content object 823. The pilot content object 823 can be positioned before or after the target content object 821 and its position is indicated by the offset information of the CPM header 815 included in the common header 811.

The DRMv2.x DCF supports the extensibility as well as multipart DCF. In contrast, the DRMv1.0 DCF has a structure that can include only one content object.

In order to package the target object 821 and the pilot content object 823 into a single DCF, additional offset information has to be added in the header to locate the pilot content object 823. In an exemplary embodiment of the present invention, the offset information is provided by means of the CPM header 815 as shown in FIG. 8..

The CPM header 815 can be added as a new header box as shown in FIG. 8 or implemented in the conventional 'Content Location header' field. That is, when the target content object 821 and the pilot content object 823 are contained in a single DCF, the offset information for the pilot content object may be inserted into the 'Content Location header'. The 'Content Location header includes the metadata information as shown in table 6.

## Table 6

ADContentLocation = "AD-Content-Location" ":: AD-content-uri

AD-content-uri = token | ( token || "*" || start_byte || end )

end = ("-" || end_byte) | ("+" || n_bytes)

start_byte = *digit

end_byte = *digit | "end"

n_bytes = *digit

As shown in table 6, the 'AD-Content' represents the content defined in an exemplary embodiment of the present invention (i.e. pilot content) but is not limited to the above expression. The 'AD-Content-uri' is a unique identifier (address). The 'token' is an indicator for relative location of the DCF file and exists in the empty string, i.e. the corresponding file. The 'start_byte' indicates the first byte of the pilot content object 823 in the corresponding DCF file, and the 'end_byte' indicates the last byte of the pilot content object 823 in the corresponding DCF file.

In an exemplary embodiment of the present invention, the pilot content offset information is expressed in the form of a textual header and can be inserted into both the DRMv1.0 DCF header and DRMv2.x DCF header. In this case, the pilot content object 823 can be simply configured by positioning before and after the target content object 821.

FIG. 9 is a diagram illustrating a format of a package content according to another exemplary embodiment of the present invention.

In the exemplary embodiment of FIG. 9, the content objects, i.e. the pilot content object and the target content object, are packaged into a multipart DCF file on the basis of extensibility of the DRMv2.x DCF.

Referring to FIG. 9, the multipart DCF according to an exemplary embodiment of the present invention, i.e. the package content format, is composed of a plurality of container boxes 910 and 920. That is, the target content object 945 is contained in a single container box 910, and the pilot content object 965 is contained in another single container box 920. The container boxes 910 and 920 include the individual DCF headers boxes 930 and 950 and individual DRM content boxes 940 and 960.

The DCF header box 930 of the container box 910 includes a common header box 931 and the user data box 933, and the DRM content box 940 of the container box 910 includes the target content object 945. Particularly, the common headers box 931 includes the CPM header 935 indicating the metadata information on the pilot content object 965 (e.g. location information and metadata about the pilot content object).

The DCF header box 950 of the container box 920 includes a common header box 951 and the user data box 953, and the DRM content box 960 includes the pilot content object 965. In common headers box 951 of the container box 920, the CPM header can be omitted.

A single DCF file can include multiple container boxes in the DRMv2.x DCF. In accordance with an exemplary embodiment of the present invention, the pilot content object 965 and the target content object 945 are packaged in the multipart DCF. In case of using the multipart DCF, a pilot content identifier is carried by the CPM header 935 inserted into the common header box 931 such that the mobile terminal 300 can locate the corresponding pilot content object 965 by referencing the pilot content identifier.

FIG. 10 is a diagram illustrating a format of a package content according to another exemplary embodiment of the present invention.

In the exemplary embodiment of FIG. 10, the content objects, i.e. the pilot content object and the target content object, are packaged into a container box on the basis of the extensibility of the DRMv2.x DCF. That is, a pilot content object is packed into an extended box and then inserted in the container box.

Referring to FIG. 10, the package content format according to an exemplary embodiment of the present invention is configured with a container box 1000 including a DCF header box 1010, a DRM content box 1020, and an extended box 1030. The DCF header box 1010 includes a common header box 1011 and a user data box 1013, the DRM content box 1020 includes a target content object 1025, and the extended box 1030 includes a pilot content object 1035.

Particularly, the common header box 1011 includes a CPM header 1015 containing the information on the pilot content object (e.g. location information and meta information related to the pilot content object). The extended box 1030 contains the pilot content object 1035 encrypted entirely as shown in table 7.

Table 7

```
aligned(8) class OMADRMContentObject extends FullBox('odag', version, 0) {

        unsigned int(64)   OMADRMADDataLength;   // Length of the encrypted pilot

content
```

```
        byte                 OMADRMADData[];        // Encrypted pilot content

}
```

The container box 1000 can be extended to include the extended box 1030 after the DRM content box 1020. As shown in FIG. 10, the container box 1000 includes the DRM content box 1020 containing the target content object 1025 and the extended box 1030 containing the pilot content object 1035. In an exemplary embodiment of the present invention, an additional box for carrying the pilot content object 1035 is defined such that the target content object 1025 and the pilot content object 1035 are packaged into the single container box 1000.

FIG. 11 is a diagram illustrating a format of a package content according to still another exemplary embodiment of the present invention.

In the exemplary embodiment of FIG. 11, the pilot content object 1123 is packaged in a mutable DRM Information box of a PDCF file on the basis of the extensibility of the DRMv2.x DCF. That is the target content object 1145 and the pilot content object 1123 are packaged using the Mutable DRM Information box of the PDCF file.

Referring to FIG. 11, the package content format according to an exemplary embodiment of the present invention includes multiple container boxes 1110 and 1150 and a Mutable DRM Information box 1120 placed after the last container box 1150.

Each of the container boxes 1110 and 1150 includes a DCF header box 1130 and a DRM content box 1140. The DCF header box 1130 includes a common header box 1131 and a user data box 1133, and the DRM content box 1140 includes the target content object 1145. Particularly, the common headers box 1131 includes a CPM header 1135 containing the information on the pilot content object (e.g. location information and meta information related to the pilot content object). The CPM header 1135 can be inserted into the common headers box 1131 of the very first container box 1110.

The DRMv2.x DCF file provides an editable space called Mutable DRM information box 1120 following the last container box 1150.

The DRMv2.x DCF file can include a Transaction Tracking box, a Rights Object (RO) box, and user data box that can be added or edited by the mobile terminal 300. The editable space can be expressed as shown in table 8.

Table 8

```
aligned(8) MutableDRMInformation extends Box('mdri') {

      Box data[];        // array of any boxes and free space

}
```

In case that the data integrity of the pilot content object 1123 configured with the CPM according to one of the exemplary embodiments of FIGs. 7 to 11 is not guaranteed, only the pilot content object can be downloaded again. In this case a specific box as shown in table 9 can be added to the Mutable DRM Information box 1120.

Table 9

```
aligned(8) class OMADRMADContentObject extends FullBox('oaad', version, D) {

      unsigned int(16)   ADContentIDLength;      // Length of AD-Content ID field
(bytes)

      char                ADContentID[];          // AD-Content ID string

      unsigned int(64)   OMADRMADDataLength  // Length of the encrypted pilot
content

      byte                OMADRMADData[]       // Encrypted pilot content

}
```

As shown in table 9, the Mutable DRM Information box 1120 can include an 'ADContentID' corresponding to the content identifier (Content ID or CID) of the pilot content object intended to download.

Until now, the package content formats for packaging the pilot content and target content along with the CPM header containing the information on the pilot content are described with the exemplary embodiments of FIGs. 7 to 11. In one of the exemplary embodiments of the present invention, a DCF file is configured with a pilot content object and a target content object along with the information on the locations of the target and pilot content objects. The location information of the target and pilot content objects is provided by a CPM header inserted into the Common Headers box of the DCF file.

As described above, the CPM header can be inserted in the form of a Textual Header. In case that the CPM header is inserted in the form of a Textual Header, the CPM header can include the metadata information as shown in table 10.

Table 10

| |
|---|
| CPM = "CPM" ":" block-size ";" block-num ";" milestones-num ":" prime ";" Plaintextlength ";" Hash1 ";" Hash2 |
| Block-size = *digit |
| Block-num = *digit |
| Prime = *digit |
| plaintextLength = *digit |
| Hash1 = token |
| Hash2 = token |

As shown in table 10, the 'block-size' field indicates a size of a block, the 'block-num' field indicates the total number of blocks, the 'milestones-num' field indicates the total number of milestones, the 'prime' field indicates the prime value used in the threshold scheme, the 'plaintextLength' field indicates the length of a plaintext of the pilot content in byte, the 'Hash1' field indicates the method used in a hash function 1, and the 'Hash2' field indicates the method used in a hash function 2.

Referring to table 10, if the 'prim' field is set to 0 (prime == 0) and if the value of the 'block-num' field is equal to the value of 'milestones-num' field (block-num == milestones-num), this means that the pilot content object has been encrypted with the all or nothing scheme.

If the 'prime' field is greater than 0 (prime > 0) and the 'block-num' field is set to a value greater than that of the 'milestones-num' field (block-num > milestones-num), this means that the pilot content object has been encrypted with the threshold scheme.

In an exemplary embodiment of the present invention, the CPM header can be configured on the bases of the extensibility of the DRMv2.x DCF. That is, the Common Header box of the DRMv2.x DCF supports the extensibility for additional boxes. A CPM header box defined according to an exemplary embodiment of the present invention can be inserted into the common header box as shown in table 11.

```
aligned(8) class OMADRMCPMHeader extends FullBox('ocpm', version, 0) {

        unsigned int(8)      EncryptionMethod;       // Encryption method

        unsigned int(8)      PaddingScheme;          // Padding type

        unsigned int(64)     PlaintextLength;         // Plaintext length in bytes

        unsigned int(16)     ADContentIDLength;       // Length of AD ContentID field

(bytes)         unsigned int(16)     ADCContentURLLength;  // AD Content URL field

length (bytes)

        char                 ADContentID[];           // AD Content ID string

        char                 ADContentURL[];          // AD Content URL string

        unsigned int(16)   blockLength;                // Length of each block (bytes)

        unsigned int(16)   blockNum;                   // The number of blocks

        unsigned int(16)   milestonNum;                // The number of milestones

        unsigned int(64)   prime;                      // prime value for Threshold
```

```
        unsigned int(8)   Hash1Method;              // Hash1 method

        unsigned int(8)   Hash2Method;              // Hash2 method
```

As shown in table 11, the CPM header box includes the metadata information such as an 'Encryption Method' field, an 'Encryption padding' field, a Plaintext Length' field, a 'Content ID & Length' field, a Content URL & Length' field, a 'Content ID' field, a 'content URL' field, a 'block Length & Number' field, a 'milestone Number' field, and a 'prime' field.

Referring to FIG. 11, if the 'prime' field is set to 0 (prime == 0) and if the 'block-num' field is equal to the value of 'milestones-num' field (block-num == milestones-num), this means that the pilot content object has been encrypted with the all or nothing scheme.

If the 'prime' field is greater than 0 (prime > 0) and the 'block-num' field is set to a value greater than that of the 'milestones-num' field (block-num > milestones-num), this means that the pilot content object has been encrypted with the threshold scheme.

If the 'block-num' field is set to a value less than that of the 'milestones-num' field (block-num < milestones-num), this means that the content object is formatted with an error. In this case, the pilot content object can be downloaded.

The pilot and target contents encryption procedure according to an exemplary embodiment of the present invention is described hereinafter in detail.

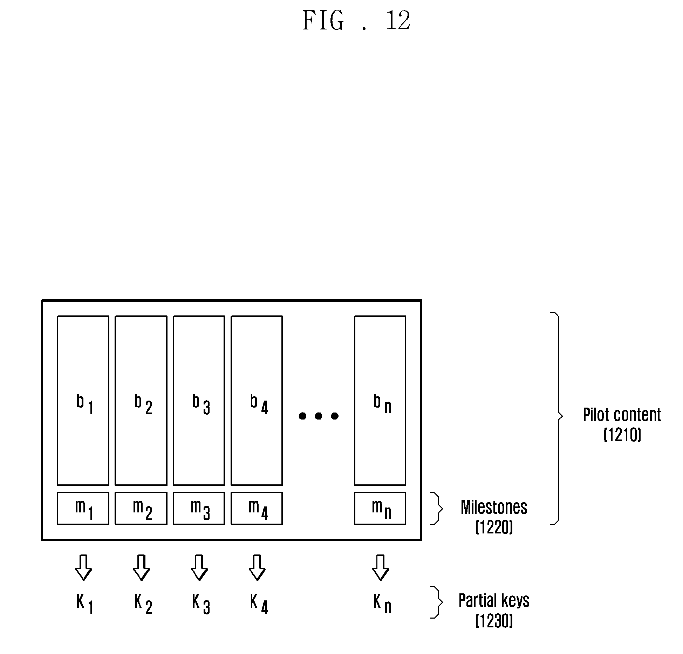

FIG. 12 is a diagram illustrating a principle for structuring the pilot content and encrypting the target content using the pilot content according to an exemplary embodiment of the present invention.

In the following, how to create the package content with the all or nothing scheme and the threshold scheme is described with reference to the drawings.

First, the all or nothing scheme-based package content creation method is described first with reference to FIGs. 1 and 12.

As shown in FIG. 12, the packaging server 200 first segments the advertisement content into a predetermined number of data blocks ($b_1$ to $b_n$). Here, n is a natural value indicating the number of data blocks.

Next, the packaging server 200 selects milestones ($m_1$ to $m_n$) for the data blocks ($b_1$ to $b_n$). Here, the number of milestones ($m_1$ to $m_n$) 1220 is equal to the number of data blocks ($b_1$ to $b_n$). In an exemplary embodiment of the present invention, the size of the mile stones 1220 ($m_1$ to $m_n$) is set to 128 bits, but the size of the milestones can be changed depending on the system configuration.

Next, the packaging server 200 assigns the milestones ($m_1$ to $m_n$) to the individual data blocks ($b_1$ to $b_n$) randomly. Although it is depicted that the milestones ($m_1$ to $m_n$) are assigned to the data blocks ($b_1$ to $b_n$) in sequential order, the present invention is not limited to such an ordering. For instance, the milestones ($m_1$ to $m_n$) can be assigned randomly or in a reverse order.

Next, the packaging server 200 calculates partial keys ($K_1$ to $K_n$) 1230 using individual pairs of the data blocks ($b_1$ to $b_n$) of the advertisement content and the milestones ($m_1$ to $m_n$) assigned to the individual data blocks ($b_1$ to $b_n$). The partial keys ($K_1$ to $K_n$) 1230 are temporary keys generated while encrypting the pilot content to derive the final encryption key for encrypting the target content, i.e. the target content encryption key. The partial keys ($K_1$ to $K_n$) are generated in the same number as that of the data blocks ($b_1$ to $b_n$) or the milestones assigned to the data blocks ($b_1$ to $b_n$). When the number of data blocks constituting the pilot content is n, the n partial keys are generated.

The partial keys are generated using the data blocks and milestones assigned to the data blocks by equation (1):

$$K_i = Hash_1(b_i) \oplus m_i \qquad (1 \le i \le n) \qquad\qquad (1)$$

where $K_i$ denotes a partial key calculated from $i^{th}$ data block ($b_i$) and $i^{th}$ milestone ($m_i$),

$b_i$ denotes $i^{th}$ data block,

$m_i$ denotes $i_{th}$ milestone, and

$Hash_1$ denotes a cryptographic hash function for compressing the data blocks of the advertisement content.

The hash function is a function that converts a bit string having a variable length to output a random bit string having a uniform length. The hash function is an algorithm designed to make it impossible to infer the input value from a specific output value or to output the same result from different input values for the security purpose cryptographically. There have been many hash function algorithms. The SHA-1 algorithm is a U.S. Federal Information Processing Standard that is the most widely used hash function algorithm, and the MDS of the RSA, RIPEDMD as a European Standard, and the HAS-160 as the international standard are well known as hash function algorithms.

Next, the packaging server 200 creates a target content encryption key ($CEK_t$) using the partial keys ($K_1$ to $K_n$) 1230 generated by equation (1). The target content encryption key ($CEK_t$) is created using equation (2):

$$CEK_t = Hash_2 (K_1, K_2, \ldots, K_n) \qquad\qquad (2)$$

where $CEK_t$ denotes the encryption key to encrypt the target content,

$K_1$ to $K_n$ are the partial keys generated by equation (1), and

$Hash_2$ denotes a hash function for generating the target content encryption key.

Next, the packaging server 200 encrypts the target content using the target content encryption key ($CEK_t$) created by equation (2). At this time the target content encryption process can follow the process specified in the standard (e.g. OMA-DRM 2.x).

Next, the packaging server 200 selects a pilot content encryption key ($CEK_p$) randomly. The pilot content encryption key ($CEK_p$) can be a symmetric key of 128-bit string. Next, the packaging server 200 encrypts the advertisement content with the pilot content encryption key ($CEK_p$) to generate the pilot content 1210. The encryption process of the advertisement content using the pilot content encryption key ($CKE_p$) can follow the process specified in the standard (e.g. OMA-DRM 2.x).

Next, the packaging server 200 creates a package content by packaging the pilot content and the target content through the procedures described with reference to FIGs. 7 to 11. At this time, the packaging server inserts the CPM header containing the information related to the pilot content (such as location information on the pilot content) into the package content.

Additionally, the packaging server 200 can encrypt the pilot content encryption key ($CEK_p$) with the public key of the mobile terminal 300 and create the final license value for the package content with the pilot content encryption key (CEK$_p$) and the additional information. The public key-based encryption process can follow the specification of the standard (e.g. OMA-DRM 2.x), and the additional information can include the permissions and constraints.

The package content generation method using the all or nothing scheme according to an exemplary embodiment of the present invention has been described above. The threshold scheme-based package content generation method according to an exemplary embodiment of the present invention is described hereinafter with reference to FIGs. 1 and 12.

The threshold scheme-based package content generation method permits the decryption of the target content, i.e. the playback of the target content, when a predetermined number of partial keys corresponding to t milestones of the total n milestones, have been acquired. This means that the target content decryption key (CEK$_t$) is acquired by playing more than t data blocks (milestones) of the total n data blocks.

For this purpose, the packaging server 200 can generate a parameter for use in the threshold scheme.

The packaging server 200 can define a total number of milestones 'n', a random prime 'p' for a polynomial f (x), a least number of milestones 't' to permit the grant of the decryption key.

The packaging server 200 first determines the total number of milestones 'n' to be assigned to the data blocks (b$_1$ to b$_n$) of the advertisement content. The total number of milestones can be equal to or less than the number of the data blocks (b$_1$ to b$_n$). In the following, the description is made under the assumption that the total number of milestones is n as shown in FIG. 12.

Next, the packaging server 200 generates a coefficient (a$_0$) of the polynomial f(x) on the Galois Field GF(p). The coefficient (a$_0$) is a positive integer value.

Here, the Galois Field GF(p) is a finite field defined in abstract algebra or field theory. The GF(p) is used in cryptography and coding theory due to its mathematically special characteristics. The GF(p) is a finite field having p elements. Here, p is a prime number. In general, the term "field" can be defined as a number system allowing four fundamental rules of arithmetic and using the finite element (p). Basically, assuming a set {0, 1, 2, ..., p-1} of a prime number p, the elements of the set are operated as the normal natural numbers and then takes the remainder of the division by p. That is, the GF(p) of the prime number p is performed modular arithmetic to {0, 1, 2, ..., p-1}. Hereinafter, these finite fields are called Boolean algebra (Zp).

Typically, when a field exists, an extension field can be considered. The extension field is a larger field which contains the base field by adding new elements. For instance, the rational number and the real number, the real number and the complex number are examples of the extension fields. A natural and basic method for making an extension field is to add the root of a polynomial f(x). For instance, considering a polynomial "$x^2 + 1 = 0$" in real number, the imaginary number 'i' is added (since there is no root in real number) so as to obtain the extension field of the complex number.

As described above, considering a polynomial having the coefficients as the elements of a field, it is possible to obtain the extension field containing all the roots of the polynomial. Also, when a finite field exists, the finite field is the extension field of the Zp to a prime number p, where p is determined uniquely. That is, a finite can be extended by adding some elements to Zp. Also, a finite field becomes an extension field of Zp by adding only the roots of polynomial $x^{(p^n)} - x$ to the elements of $Z_p$ to a prime number p and natural number n. The order of the polynomial is $p^n$, and the total number of elements is $p^n$.

Accordingly, GF($2^8$) is an extension field obtained by adding the roots of the polynomial $x^{(p^n)} - x$ to the Boolean algebra ($Z_2$), and a finite field having $2^8 = 256$ elements.

According to the above theory, it is possible to determine the number of partial keys to permit the creation of the normal decryption key for decoding the target content using a function f(x), whereby the mobile terminal can acquire the target content decryption key using more than t partial keys (S$_i$) while decrypting the pilot content.

The packaging server 200 can determine the random prime number p to obtain the polynomial f(x). The random prime number p is a value satisfying the condition of inequality (3):

$$p > \max(a_0, n) \qquad (3)$$

As shown in equation (3), the packaging server 200 can determine the random prime p greater than either of the parameters, a$_0$ generated randomly and the total number of the milestones n. For instance, if a$_0$=10 and n=7, the random prime p is set to a value greater than 10; and if a$_0$=5 and n=9, the random prime p is set to a value greater than 9.

Next, the packaging server 200 sets the coefficient of the polynomial f(x) to a positive integer of t-1 less than the random prime p, and defines the coefficients of the f(x) a$_1$, a$_2$, ... a$_{t-1}$. Since a$_0$ of the coefficients of the polynomial f(x) has been generated in the above process, description on the a$_0$ is omitted herein. That is, the number of coefficients of the polynomial f(x) becomes t (including a$_0$ and the t-1 coefficients).

The packaging server 200 can acquire the polynomial f(x) on the Galois field GF(p) using the coefficients a$_0$, a$_1$, a$_2$, ..., a$_{t-1}$. The polynomial f(x) on the GF(p) is acquired using equation (4):

$$f(x) = \sum_{j=0}^{t-1} a_j x^j = a_{t-1} x^{t-1} + a_{t-2} x^{t-2} + ... + a_2 x^2 + a_1 x \_ a_0 \qquad (4)$$

Next, the packaging server 200 creates the target content encryption key ($CEK_t$) for encrypting the target content using the coefficient ($a_0$) generated randomly. The target content encryption key ($CEK_t$) can be created using equation (5):

$$CEK_t = Hash_2(a_0) \qquad (5)$$

where $CEK_t$ denotes the target content encryption key,
$a_0$ denotes the coefficient of the polynomial f(x),
f(x) denotes a polynomial on the GF(p), and
Hash2 denotes a hash function for generating the target content encryption key.

The target content encryption key $CEK_t$ corresponds to the target content decryption key to be calculated at the mobile terminal.

The packaging server 200 can create and stored the parameters for the threshold scheme. Next, the packaging server 200 creates the package content based on the threshold scheme using the above described parameters.

The threshold scheme-based package content generation method according to another exemplary embodiment of the present invention is described hereinafter with reference to FIGs. 1 and 12.

The packaging server 200 first segments an advertisement content into n data blocks ($b_1$ to $b_n$) as shown in FIG. 12. Here, n is a natural value.

Next, the packaging server 200 selects milestones ($m_1$ to $m_n$) 1220 to be allocated the individual data blocks ($b_1$ to $b_n$) of the advertisement content. Here, the number of the milestones ($m_1$ to $m_n$) is equal to the number of the data blocks ($b_1$ to $b_n$) constituting the advertisement content. At this time, the packaging server 200 selects a predetermined number of milestones among the entire milestones ($m_1$ to $m_n$) for generating at least a number of partial keys according to the threshold scheme. Hereinafter, the partial keys defined in the threshold scheme is called share key ($S_i$).

That is, the packaging server 200 selects the share ($S_i$) and milestone ($m_i$) value from individual data blocks ($b_1$ to $b_n$) of the advertisement content. The share ($S_i$) and milestone ($m_i$) can be calculated equations (6) and (7), respectively.

$$S_i = f(i) \bmod p \qquad (1 \leq i \leq n) \qquad (6)$$

$$m_i = S_i \oplus Hash_1(b_i) \qquad (1 \leq i \leq n) \qquad (7)$$

Next, the packaging server 200 assigns the milestones ($m_1$ to $m_n$) 1220 to the individual data blocks ($b_1$ to $b_n$) of the advertisement content randomly. Although the milestones ($m_1$ to $m_n$) 1220 are shown assigned in sequential order, the present invention is not limited thereto. For instance, the milestones ($m_1$ to $m_n$) 1220 can be assigned in another specific order or randomly.

Next, the packaging server 200 generates at least a number of partial keys 1230 using the data blocks ($b_1$ to $b_n$) of the advertisement content and the mile stones ($m_1$ to $m_n$) assigned to the individual data blocks ($b_1$ to $b_n$).

If the at least number of the partial keys ($K_1$ to $K_n$) 1230 is n, the partial keys 1230 can be calculated from the data blocks ($b_1$ to $b_n$) and the milestones (m1 to mn) 1220 using equation (1). If the least number of the partial keys ($K_1$ to Kp) 1230 is a random value p, the partial keys 1230 can be calculated from the data blocks (b1 to bn) and the milestones ($m_1$ to $m_n$) 1220 using equation (1) under the condition of ($1 \leq i \leq p$). Unlike the all or nothing scheme in which n partial keys are obtained from the n data blocks (or milestones), the threshold scheme can generate n partial keys equal to the n data blocks in number or p partial keys less than the n data blocks in number.

Next, the packaging server 200 encrypts the target content using the target content encryption key ($CEK_t$) created by equation (5). The target content encryption procedure follows the process specified in the standard (e.g. OMA-DRM 2.x).

Next, the packaging server 200 creates the package content by packaging the pilot content and the target content in one of the formats as shown in FIGs. 7 to 11. At this time, the packaging server 200 can configure the format of the package content with the CPM header containing the information related to the pilot content (e.g. the location information of the pilot content). Also, the packaging server 200 can encrypt the pilot content encryption key ($CEK_p$) with the public key of the mobile terminal 300 and generate a final license value for the packaging content along with the pilot content encryption key ($CEK_p$) and additional information. The public key-based encryption process can follow the process specified in the standard (e.g. OMA-DRM 2.x), and the additional information can include the permissions and constraints related to the use contents packaged in the package content.

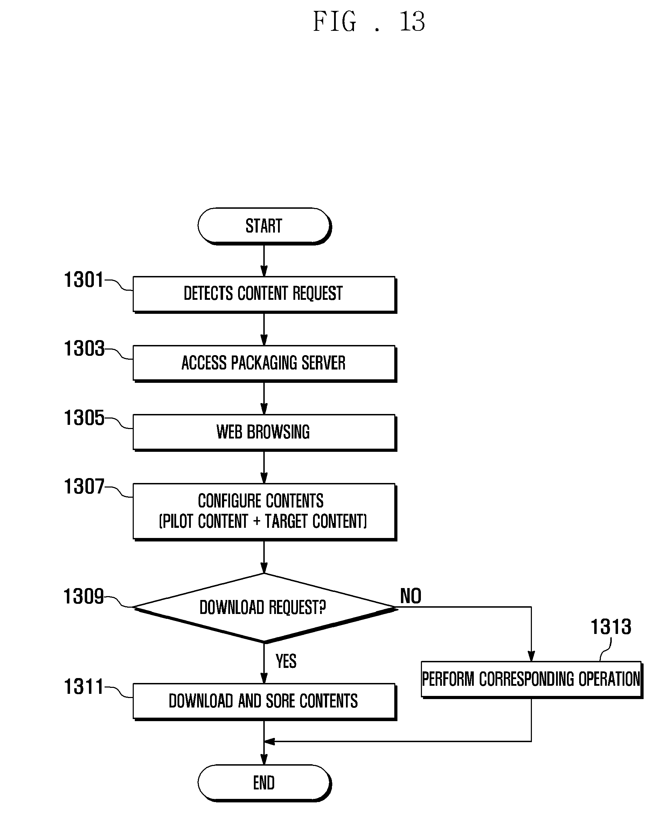

Until know, the operations of the packaging server 200, procedures for the packaging server 200 to handle the content objects using the content packaging mechanism (CPM), and how to configure the package content with the pilot can target content and locate the pilot content have been described with reference to FIGs. 4 to 12. The package content handling methods of the mobile terminal 300 are described hereinafter in detail with reference to FIGs. 13 to 16. However, the present invention is not limited to the following description but can be implemented in various other exemplary embodiments.

FIG. 13 is a flowchart illustrating a content acquisition procedure of a package content distribution method according to an exemplary embodiment of the present invention. In the exemplary embodiment of FIG. 13, the mobile terminal performs downloading a package content containing the target content and pilot content requested by the user.

Referring to FIGs. 1 and 13, the mobile terminal 300 first detects a content request command input by the user (1301). If the content request command has been detected, the mobile terminal 300 accesses the packaging server 200 (1303) and browses the packaging server 200 for the contents requested by the user (1305). Once the mobile terminal 300 has connected to the packaging server 200, the user can select content by means of a web browsing application, for example. At this time, the user can select at least one of the content including normal content, pilot content, target content, and packaging content.

With the selection of a target content, the user can request a packaged content transmission. In this case, the packaging server 200 can select randomly a pilot content to be transmitted along with the selected target content. Also, the user can select a pilot content to be packaged with the target content.

The mobile terminal 300 configures a package content in communication with the packaging server through the web browsing according to the user's intention (1307).

Next, the mobile terminal 300 detects a user command and determines whether the user command is a download request command (1309). If it has been determined that the user command is not a download request command, the mobile terminal 300 executes the corresponding operation associated with the user command (1313). At this time, the user command may be one of continuing the configuration of the content, selecting another content, or terminating the connection with the packaging server 200, etc.

Otherwise, if it has been determined that the user command is the download request command, the mobile terminal 300 downloads and stores the content requested by the user (1311). In case that the downloaded content is a package content, the mobile terminal 300 can perform a process for acquiring a free license for playing the pilot content packaged in the package content (not shown). At this time, the package content can be recognized by checking whether the downloaded content has a CPM header. In order to acquire the free license, the mobile terminal 300 can access the RI 400 by referencing the URL of the RI 400 that is contained in the package content. Also, the mobile terminal 300 can acquire the free license from the packaging server 200 along with the package content.

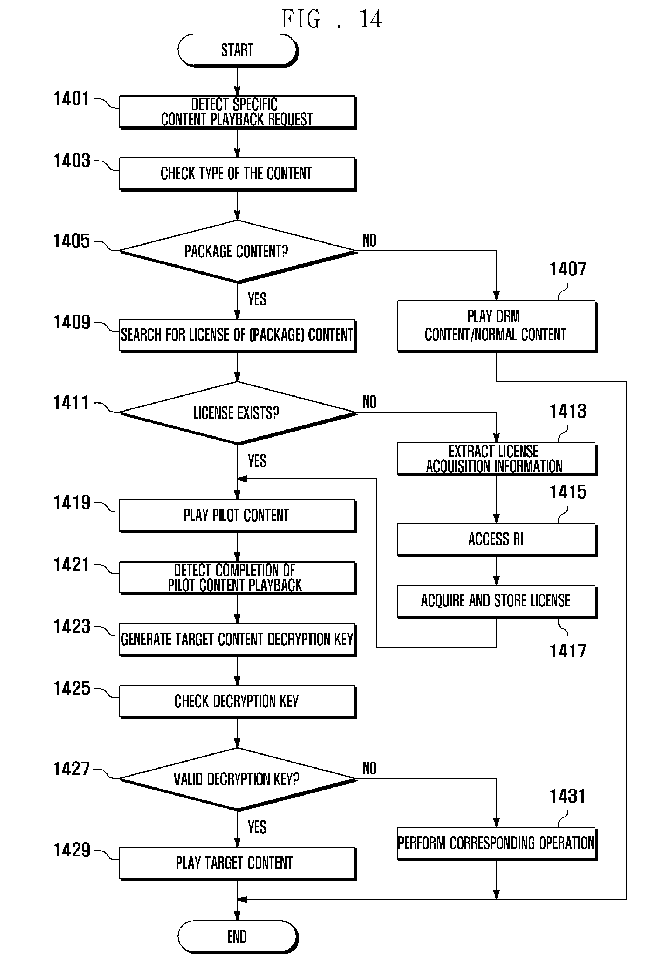

FIG. 14 is a flowchart illustrating a package content playback procedure of a package content distribution method according to an exemplary embodiment of the present invention.

Referring to FIGs. 1 and 14, after a package content has been downloaded, the mobile terminal 1401 detects a content playback request command input by the user (1401). If a content playback request command has been detected, the mobile terminal 300 checks the type of the content requested to be played (1403) and determines whether the type of the content requested to be played is a package content (1405). The type of the content can be identified by referencing the information contained in the header of the content format. Particularly in an exemplary embodiment of the present invention, the content type can be determined depending on whether the common header box of the DCF format includes the CPM header. In the exemplary embodiment of FIG. 14, the description is made in case that the content requested to be played is a package content.

If it has been determined that the type of the content is not the package content, i.e. a normal content or a normal DRM content, the mobile terminal 300 starts playback of the corresponding content (1407). Since the normal content playback procedure is well known and, particularly, the playback of the normal DRM content is specified in the standards (e.g. OMA-DRM 2.x), detailed description thereon is omitted herein.

In case of the package content, the CPM header exists in the common header box of the DCF format carrying package content, and thus the mobile terminal 300 can identify the package content by referencing the information contained in the CPM header. The mobile terminal 300 can locate the position of the pilot content in the package content by referencing the CPM header and play the pilot content first.

In order play the pilot content, the mobile terminal 300 searches for the license to decrypt the pilot content (1409). The license is for decrypting the pilot content contained in the package content. This license is a free license containing the pilot content decryption key.

Next, the mobile terminal 300 determines whether a valid license of the pilot content exists in the mobile terminal 300 (1411). If it has been determined that no valid license exists in the mobile terminal 300, the mobile terminal 300 extracts information required for acquiring the license from the package content (1413). This information can be the URL of the RI 400 contained in the header of the package content. Next, the mobile terminal 300 accesses the RI 400 using the extracted URL (1415) and downloads and stored the license issued by the RI 400 (1417). Once the license has been acquired, the mobile terminal 300 plays the pilot content using the license (1419).

Otherwise, if it has been determined that a valid license exists in the mobile terminal 300 at step 1411, the mobile terminal 300 plays the pilot content using the license (1419). While playing the pilot content, the mobile terminal 300 acquires at least one partial key as a result of decrypting the pilot content. That is, the mobile terminal 300 acquires the partial keys for use in creation of the decryption key for decrypting the target content packaged in the package content by decrypting the pilot content. In more detail, the mobile terminal 300 buffers at least one partial key extracted from the data blocks constituting the pilot content and milestones assigned to the data blocks while performing decryption to play the pilot content.

Next, the mobile terminal 300 detects the completion of the playback of the pilot content (1421) and generates the target content decryption key using the partial key(s) buffered during decrypting the pilot content (1423). The target content decryption key corresponds to the encryption key used for encrypting the target content. The target content encryption key can be the encryption key generated while encrypting the pilot content at the packaging server 200. The target content decryption key generation procedure corresponding to steps 1419 to 1423 is described later in more detail. The completion of the pilot content playback can be detected at the time point where the playback of the entire data blocks constituting the pilot content ends, or the target content decryption key is acquired, or the playback of the pilot content is terminated by a user request command.

Once the target content decryption key has been generated at step 1423, the mobile terminal verifies the target content decryption key according to a predetermined method (1425) and determines whether the target content decryption key is a valid decryption key (1427). That is, the mobile terminal 300 can check whether target content decryption key is generated through an illegal activity (e.g. skip, fast forward, etc.).

If it has been determined that the target content decryption key is not a valid decryption key, the mobile terminal 300 performs an action corresponding the situation (1431). For instance, the mobile terminal 300 can output an alert and/or announcement notifying the user of abnormal decryption key. Also, the mobile terminal 300 can block the playback of the target content after the playback of the pilot content and repeat the playback of the pilot content. Also, the mobile terminal 300 can terminate the playback of the package content forcibly.

The invalid decryption key is the key created through an abnormal behavior of the user such as skip and fast forward manipulation of the pilot content that does not satisfy the condition for generating the valid target content decryption key.

If it has been determined that the target content decryption is a valid decryption key at step 1427, the mobile terminal 300 plays the target content contained in the package content using the target content decryption key generated as a result of the normal playback of the pilot content (1429).

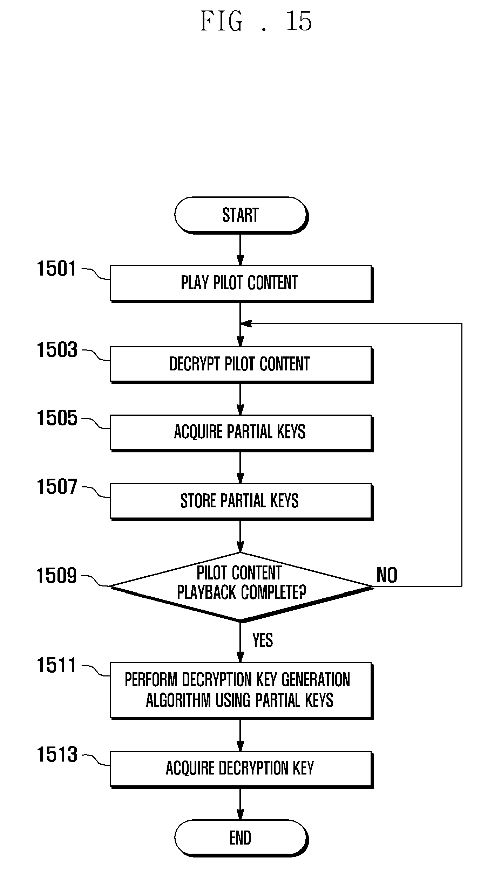

FIG. 15 is a flowchart illustrating a pilot content decryption key generation procedure of a package content distribution method according to an exemplary embodiment of the present invention.

Referring to FIGs. 1 and 15, once a content playback request command is detected, the mobile terminal 300 locates the position of the pilot content in the package content by referencing the CPM header and starts playing the pilot content (1501). The mobile terminal 300 starts decryption of the pilot content with the start of the pilot content playback using a decryption scheme corresponding to the encryption scheme used for encrypting the pilot content at the packaging server 200 (1503).

Next, the mobile terminal 300 extracts the partial keys from the data blocks of the pilot content and the milestones assigned to the data blocks while decrypting the pilot content (1505). At this time, the partial keys can be obtained based on the all or nothing scheme or the threshold scheme, as previously described. The partial keys acquisition procedure is described later in detail.

Next, the mobile terminal 300 stores the partial keys extracted while decrypting the pilot content (1507). At this time, one or more partial keys can be accumulated according to a predetermined number of partial keys to permit the generation of the target content decryption key.

Next, the mobile terminal 300 checks whether the pilot content has been played enough of the pilot content to fulfill the sufficient condition to generate the target content decryption key (1509). The sufficient condition can be fulfilled by the completion of the playback of the entire pilot content or by playing the pilot content as much as needed to obtain a number of data blocks sufficient to generate the target content decryption key. The pilot content playback may be terminated by a user command.

If the pilot content has been played enough to satisfy the sufficient condition to grant the target content decryption key, the mobile terminal 300 executes a decryption key generation algorithm (1511) and generates the target content decryption key using the accumulated partial keys (1513). Afterward, the mobile terminal 300 can verify the validity of the generated target content decryption key and start playing the target content using the decryption key.

Until now, the package content distribution method of the present invention has been described with the operations of the mobile terminal 300. The target content decryption key generation procedure of the mobile terminal is described in more detail with the all or nothing scheme and the threshold scheme.

First, the all or nothing scheme-based target content decryption key generation procedure is described.

In the all or nothing scheme-based target content decryption key generation procedure, the mobile terminal 300 first acquires a free license for playing the pilot content according to the user's selection. The free license contains a pilot content decryption key (CEKp). Since the pilot content decryption key ($CEK_p$) acquisition procedure can follow the procedure specified in the standards (e.g. OMA-DRM 2.x), detailed description thereon is omitted herein.

The mobile terminal 300 detects a content playback request command for playing the package content or the target content contained in the package content. If the content playback request command has been detected, the mobile terminal 300 starts playing the pilot content using the pilot content decryption key ($CEK_p$) first.

At this time, the mobile terminal 300 can perform decryption on the pilot content to acquire the target content decryption key.

In more detail, the mobile terminal 300 decrypts the first data block ($b_1$) of the pilot content using the decryption key ($CEK_p$) and reads the value of the milestone ($m_1$) mapped to the first data block ($b_1$) while playing the first data block ($b_1$). Next, the mobile terminal 300 calculates the first partial key ($K_1$) using the first milestone ($m_1$) and stores the first partial ($K_1$). The first partial key ($K_1$) can be calculated using equation (8):

$$K_1 = Hash_1(b_1) \oplus m_1 \qquad\qquad (8)$$

where K1 denotes the first partial key calculated from the first data block ($b_1$) and the first milestone ($m_1$) mapped to the first data block ($b_1$),

$b_1$ denotes the first lock of the pilot content,

$m_1$ denotes the first milestone corresponding to the first data block ($b_1$), and

Hash1 denotes the cryptographic hash function for decrypting the data blocks of the pilot content.

The mobile terminal 300 repeats the partial key acquisition process until the pilot content playback is completed. Accordingly, the mobile terminal 300 can calculate the first to $n^{th}$ partial keys using equation (8). The partial key acquisition process can be normalized as equation (1). That is, the mobile terminal 300 can acquire the partial keys by performing a decryption scheme corresponding to the encryption scheme used for encrypting the pilot content at the packaging server 200.

Once the first to $n_{th}$ partial keys ($K_1$ to $K_n$) have been acquired by equation (1), the mobile terminal 300 generates a decryption key ($CEK_t$), using the first to $n_{th}$ partial keys ($K_1$ to $K_n$), as the license for use of the target content. The decryption key ($CEK_t$) corresponds to the encryption key generated by the partial keys at the packaging server 200. The decryption key ($CEK_t$) is calculated by equation (2). In equation (2), $CEK_t$ can be called the target content decryption key.

Next, the mobile terminal 300 performs decryption on the target content using the target content decryption key ($CEK_t$) such that the target content is played on the terminal. After completing the playback of the target content, the mobile terminal 300 can perform additional process, e.g. discarding the decryption key or other DRM processes. The target content decryption key can be a temporary decryption key generated by playing the pilot content, whereby when the target content playback with the temporary decryption key has been completed, the temporary decryption key is discarded.

Until now, the all or nothing scheme-based target content decryption key generation procedure of the mobile terminal has been described. The threshold scheme-based target content decryption key generation procedure is next described.

In the threshold-based target content decryption key generation procedure, the mobile terminal 300 first acquires a free license for playing the pilot content according to the user's selection. Since the pilot content decryption key ($CEK_p$) acquisition procedure can follow the procedure specified in the standards (e.g. OMA-DRM 2.x), a detailed description of the process is omitted.

The mobile terminal 300 detects a content playback request command for playing the package content or the target content contained in the package content. If the content playback request command has been detected, the mobile terminal 300 starts playing the pilot content using the pilot content decryption key ($CEK_p$) first.

At this time, the mobile terminal 300 can perform decryption on the pilot content to acquire the target content decryption key.

In more detail, the mobile terminal 300 decodes the first data block ($b_1$) of the pilot content using the decryption key ($CEK_p$) and reads the value of the milestone ($m_1$) mapped to the first data block ($b_1$) while playing the first data block ($b_1$). Next, the mobile terminal 300 calculates a first share ($S_1$) corresponding to the milestone ($m_1$) and stores the first share ($S_1$).

The mobile terminal 300 can calculate the each share ($S_i$) corresponding to each milestone ($m_i$) using an equation derived from equation (7) in correspondence with the operation of the packaging server 200.

The share ($S_i$) corresponding to each milestone ($m_i$) can be calculated using equation (9).

$$S_i = m_i \oplus Hash_1(b_i) \tag{9}$$

In the meantime, the user can play the pilot content partially according to the threshold scheme. For instance, the playback of the target content can be skipped by fast forward manipulation. In the following, the description is made under the assumption that the number of the data blocks (of the pilot content) played by the user is t and the least number of the data blocks to fulfill the sufficient condition to grant the target content decryption key is t. If the number of the data blocks of the pilot content played by the user is less than the least number of the data blocks to grant the target content decryption key, i.e. t, the target content decryption key is not generated normally, resulting in playback failure of the target content.

In more detail, if the pilot content playback has ended, the mobile terminal 300 checks the number of decrypted data blocks of the pilot content. That is, the mobile terminal 300 calculates the shares ($S_1$, $S_2$, ..., $S_t$) from the decrypted data blocks and the milestones mapped to the data blocks using equation (9). Here, the shares ($S_1$, $S_2$, ..., $S_t$) are calculated in the same number of the data blocks played by the user or the milestones mapped to the data blocks, i.e. t blocks. Next, the mobile terminal 300 calculates a coefficient ($a_0$) for generating the target content decryption key using the shares ($S_1$, $S_2$, ... , $S_t$). The coefficient ($a_0$) can be calculated using equation (10).

$$a_0 = \sum_{j=1}^{t} y_j \prod_{i \leq k \leq t, k \neq j} \frac{x_k}{x_k - x_n} \tag{10}$$

where *x* and *y* are parameters corresponding to *i* and $S_i$ in equation (9).

That is, *(x,* y) = (*i, $S_i$*). Assuming t=3 and ($x_1$, $y_1$), ($x_2$, $y_2$), and ($x_3$, $y_3$), equation (10) can be rewritten as equation (11):

$$a_0 = y_1 \left( \frac{x_2}{x_2 - x_1} \bullet \frac{x_3}{x_3 - x_1} \right) + y_2 \left( \frac{x_1}{x_1 - x_2} \bullet \frac{x_3}{x_3 - x_2} \right) + y_3 \left( \frac{x_1}{x_1 - x_3} \bullet \frac{x_2}{x_2 - x_3} \right) \tag{11}$$

In equation (11), assuming that ($x_1$, $y_1$) = (1, 3), ($x_2$, $y_2$) = (2, 5), and ($x_3$, $y_3$) = (3, 10), the coefficient $a_0$ becomes 4 ($a_0$=4).

The mobile terminal 300 generates the license for the target content, i.e. the target content decryption key ($CEK_t$), using the coefficient $a_0$. The target content decryption key ($CEK_t$) can correspond to the encryption key generated by the random coefficient $a_0$ at the packaging server 200. Here, the coefficient ($a_0$) can be generated using the number of the data blocks (t data blocks) of the pilot content and the milestones mapped to the t data blocks. The formula for generating the target content decryption key ($CEK_t$) is defined by equation (5). In equation (5), $CEK_t$ can be called a decryption key for decrypting the target content.

Next, the mobile terminal 300 decrypts the target content using the generated target content decryption key ($CEK_t$) such that the target content is played. After completing the playback of the target content, the mobile terminal 300 can perform additional process, e.g. discarding the decryption key or other DRM processes. The target content decryption key can be a temporary decryption key generated by playing the pilot content, whereby when the target content playback with the temporary decryption key has been completed, the temporary decryption key is discarded.

Until now, the all or nothing scheme-based target content decryption key generation procedure and the threshold scheme-based target content decryption key generation procedure have been described. Nevertheless, other types of encryption/decryption schemes (as well as the all or nothing scheme and the threshold scheme) can be applied in other exemplary embodiments of the present invention. The target content decryption key generation procedure based on other key encryption/decryption scheme is described hereinafter.

In the above described embodiments, the number of milestone is set to be equal to the number of the data blocks of the pilot contents. That is, the description on the above target content decryption key acquisition procedures have been made under the assumption that the number of data blocks of the pilot content is n and the number of milestones mapped to the data blocks is n. The larger n is, the longer the time to recover the partial keys. Accordingly, it is not appropriate to set n to a large value for the capability-constrained system.

In view of the advertisement provider, it can be important to expose a specific part of the advertisement content to the end users rather than entire content. That is, it is important to efficiently engrave the message intended by the advertisement into the long-term memory of the end users in order for the user to purchase the advertized product. In the marketing field, researches are focused on such add-recognition/ad-awareness and ad-tracking techniques.

In an exemplary embodiment of the present invention, the number of the milestones can be set to a value different from the number of data blocks of the pilot content, i.e. less than the number of the data blocks, and arranged randomly without departing from the intended efficiency and purpose of the invention. In this case, the information such as the number and locations of the milestones and whether to take logical operations (e.g. exclusive or, XOR) with the data blocks can be provided additionally.

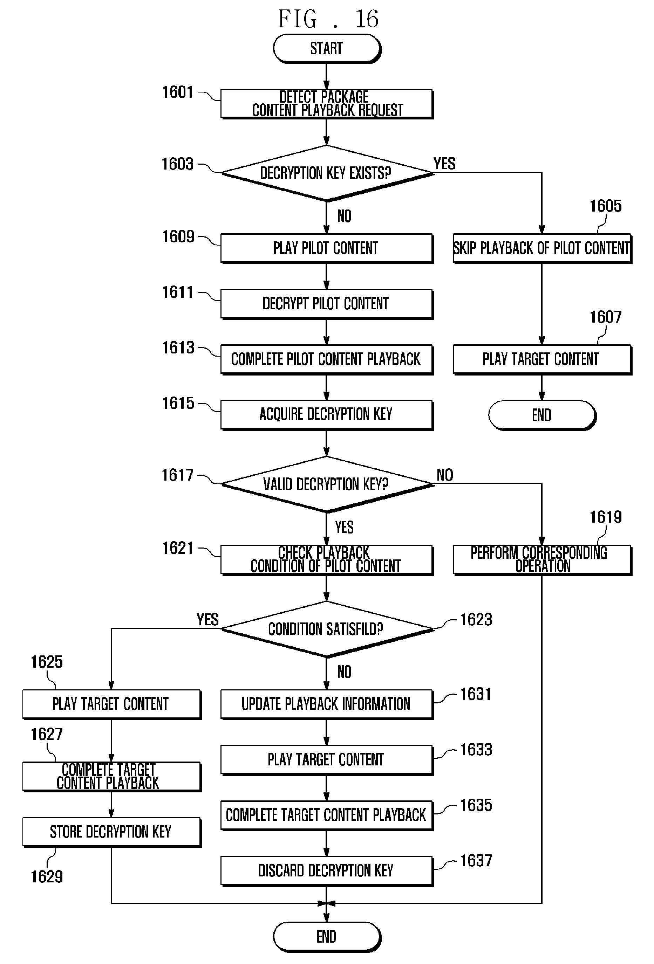

A conditional target content playback permission for the mobile terminal 300 to handle a package content according to an exemplary embodiment of the present invention is described hereinafter with reference to FIG. 16. In the embodiment of FIG. 16, the mobile terminal 300 determines whether a target content playback condition has been fulfilled and, when the target content playback condition has been fulfilled, permits the playback of the target content.

FIG. 16 is a flowchart illustrating a package content playback procedure of a package content distribution method according to another exemplary embodiment of the present invention.

Referring to FIGs. 1 and 16, after a package content has been downloaded, the mobile terminal 1401 detects a content playback request command input by the user (1601). If the content playback request command has been detected, the mobile terminal 300 determines whether a decryption key for playing the target content packaged in the package content exists (1603).

If the decryption key for playing the target content packaged in the downloaded package content exists, the mobile terminal 300 skips playing the pilot content co-packaged in the package content (1605) and plays the target content (1607). Of course, the mobile terminal 300 can be configured to play the target content in response to a user command.

If no decryption key for playing the target content exists, the mobile terminal 300 starts playing the pilot content packaged in the package content (1609). While playing the pilot content, the mobile terminal extracts the partial keys by decrypting the data blocks constituting the pilot content in series (1611) as previously described. Next, the mobile terminal 300 detects the completion of the playback of the pilot content (1613) and generates a temporary decryption key for decrypting the target content by using the partial keys acquired during the decryption of the pilot content (1615).

Next, the mobile terminal 300 verifies whether the decryption key is valid (1617). If it has been determined that the decryption key is not a valid target content decryption key, the mobile terminal 300 performs an action corresponding to the situation (1619). For instance, the mobile terminal 300 can output an alert and/or announcement notifying the user of obtaining an abnormal decryption key. Also, the mobile terminal 300 can block the playback of the target content after the playback of the pilot content and repeat the playback of the pilot content. Also, the mobile terminal 300 can terminate the playback of the package content. The invalid decryption key may be obtained or created through an abnormal behavior of the user, such as intentional skip and fast forward manipulation of the pilot content, that does not satisfying the condition for generating a valid target content decryption key.

Otherwise, if it has been determined that the decryption key is a valid target content decryption key at step 1617, the mobile terminal 300 checks whether a sufficient condition for permitting the playback of the target content (1621) has occurred. The sufficient condition may be a number of playbacks of the pilot content or a playback time of the pilot content.

Next, the mobile terminal 300 determines whether the sufficient condition for permitting the playback of the target has been fulfilled (1623). That is, the mobile terminal 300 counts the number of playbacks of the pilot content and determines, when the valid decryption key has been generated, whether the number of the playbacks of the pilot content is greater than a threshold value.

For instance, when the target condition playback threshold condition has been set to 10 playbacks of the pilot content, the mobile terminal 300 determines whether the number of the playbacks of the pilot content is greater than 10. The mobile terminal 300 increments the count by 1 only when the pilot content has been played normally. If the condition has been fulfilled, the mobile terminal 300 permits the playback of the target content (1625).

If the sufficient condition for permitting the playback of the target content has been fulfilled at step 1623, the mobile terminal 300 plays the target content using the decryption key (1625). Next, the mobile terminal 300 detects the completion of the target content (1627). If the completion of the target content has been detected, the mobile terminal 300 saves the decryption key as the valid target content decryption key (1629). The valid target content decryption key can be used at step 1603 for the playback of the target content.

If the sufficient condition for permitting the playback of the target content has not been fulfilled at step 1623, the mobile terminal 300 updates the playback information on the pilot content (1631). That is, the mobile terminal accumulates the current playback information on the previous playback information.

Next, the mobile terminal 300 performs the playback of target content using the decryption key (1633) and detects the completion of the playback of the target content (1635). If the completion of the playback of the target content has been detected, the mobile terminal 300 discards the decryption key (1637). That is, the mobile terminal 300 removes the decryption key acquired by playing the pilot content from the mobile terminal 300.

In case that the pilot content has been played normally so as to fulfill the condition to permit the playback of the target content, the pilot content playback can be omitted at the next attempt to play the target content such that the user can play the target content without playback of the pilot content.

As described with reference to FIGs. 1 and 16, the validity of the target content decryption key can be verified depending on whether the pilot content has been normally played. If the pilot content has been played abnormally, e.g. if playback of the pilot content has been skipped or fast-forwarded, a decryption key is not correctly formed and the target content is blocked from being played.

However, even when the pilot content has been played normally, the valid target content decryption key may not be generated. For instance, if a specific data block of the pilot content has been lost during download, the target content decryption key generated through the normal playback of the pilot content may be determined to be an invalid decryption key. In this case, it is impossible to play the target content with this invalid decryption key such that the user cannot watch the target content even though the pilot content has been watched normally.

In an exemplary embodiment of the present invention, an algorithm to verifying the data integrity of the target content decryption key generated by the playback of the pilot content to solve this problem is presented. That is, the mobile terminal 300 verifies the data integrity as well as the validity of the target content decryption key generated by the playback of the pilot content.

The data integrity can be verified based on the all or nothing scheme, the threshold scheme, or an extended scheme.

The packaging server 200 creates a key hash value as a reference for the mobile terminal 300 to verify the target content decryption key. The key hash value can be created using the target content decryption key ($CEK_t$) generated using the pilot content co-packaged in the package content. The key hash generation can be determined by equation (12):

$$Key - Hash = Hash(CEK_t) \qquad (12)$$

Next, the packaging server 200 inserts the key hash value into the data format of the package content or into the corresponding license. For instance, the packaging server 200 can add the key hash value in the CPM header as shown in tables 10 and 11. The key hash value inserted into the CPM header can be expressed as shown in table 12.

Table 12

| Unsigned int(64) KeyHash;  // key-hash value for target contents |
| --- |

If the package content has been received, the mobile terminal 300 generates the target content decryption key by decrypting the pilot content. The target content decryption key generation procedure can be processed internally at the time when the package content has been acquired. Next, the mobile terminal 300 verifies the data integrity of the target content decryption key using the decryption key value and the key hash value contained in the package content or the corresponding license. That is, the mobile terminal 300 compares the generated decryption key and the key hash value to determine whether they are identical with each other.

For instance, when the decryption key is C, the data integrity of the decryption key C can be verified by equation (13):

$$Key - Hash = ? \; Hash \, (C) \hspace{4cm} (13)$$

If the decryption key C and the key hash value are identical with each other, the mobile terminal 300 verifies the data integrity of the target content decryption key so as to play the target content with the target content decryption key. Sequentially, the mobile terminal 300 verifies the validity of the decryption key based on the playback state of the pilot content and plays the target content depending on the validity verification result.

If the decryption key C and the key has value are different from each other, the mobile terminal 300 verifies the lack of the data integrity on the decryption key. In this case, even when the user has played the pilot content normally, the target content decryption key is generated abnormally, resulting in playback failure of the target content.

If the lack of data integrity on the decryption key has been detected, the mobile terminal 300 determines that the data loss occurred during the download of the pilot content. In this case, the mobile terminal 300 accesses the advertisement server 100 or the packaging server 200 to download the normal pilot content. The mobile terminal 300 can check the URL for downloading the pilot content from the header of the package content.

As described above, the package content distribution method according to an exemplary embodiment of the present invention grants the service selection right for the user to watch the pilot content optionally. For instance, the package content is provided with various service options as shown in table 13 such that the user can use the package service selectively.

Table 13

| Service type | Note |
|---|---|
| Entire playback of pilot content | Free (free for entire content) |
| Partial playback of pilot content | Free/discount (free for partial content) |
| No pilot content | Pay (Pay for entire content) |

As shown in table 13, the user can acquire a free license for the entire target content as a reward of watching (listening to) the entire pilot content, or a discounted license for the target content as a reward of watching a part of the pilot content, or pay license by purchasing the license for the entire target content.

As described above, the package content distribution method, apparatus, and system of the present invention is capable of delivering a package content with an OMA DRM content format and thus providing advertisement-based free DRM content service. The package content distribution method of the present invention allows the end user to acquire the decryption key for playing a DRM content by playing an advertisement content co-packaged with the DRM content based on the all or nothing encryption/decryption algorithm or the threshold encryption/decryption algorithm, whereby the user can view or review the DRM content as a reward of watching the advertisement content and the advertiser can expect an efficient advertisement effect and collect statistical data.

Also, the package content distribution method, apparatus, and system of the present invention provides the end user with various options to consume a DRM content, whereby the user can use the DRM content in consideration of their economic condition. That is, the user can save or reduce the cost for purchasing a DRM content by watching (or listening to) the pilot content provided with the DRM content in its entirety or partially. The package content distribution method provides the service selection right for the advertisement content to the user, thereby improving user convenience. That is, since the package content service is provided with various options in the forms of <advertisement content (entire playback) + DRM content = free>, <advertisement content (partial playback) + DRM content = discount>, and <advertisement content (no playback) + DRM content = pay>, the user can acquire the DRM content with a favorite option.

Furthermore, the package content distribution method, apparatus, and system of the present invention can prevent the user from ignoring the advertisement content thereby improving the exposure effect of the advertisement and advertiser's satisfaction.

The above-described methods according to the present invention can be realized in hardware or as software or computer code that can be stored in a recording medium such as a CD ROM, a RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

**Claims**

1. A content object format configuration system, comprising:

   a target content object (750);
   a pilot content object (730) containing specific advertisement data; and
   a header (710) indicating locations of the target content object and the pilot content object.

2. The system of claim 1, wherein the target content object (750) and the pilot content object (730) are packaged in a single Digital Rights Management Content Format (DCF), and the header (710) includes metadata information related to configuration of the DCF.

3. The system of claim 2, wherein the pilot content object (730) is positioned before and after the target content object in a content region of the DCF and
   the header (710) comprises offset information indicating a position of the pilot content object.

4. The system of claim 2, wherein the target content object (750) and the pilot content object (730) are configured in a multipart DCF, the target content object(750) is included in a content region of a first part of the multipart DCF, the pilot content object (730) is included in a content region of a second part of the multipart DCF, and the header (710) is included in the first part and comprises a pilot content identifier (815) for identifying the pilot content object.

5. The system of claim 2, wherein the target content object (750) is included in a content region of the DCF, the pilot content object (730) is included in an extended box following the content region of the DCF, and the header (710) comprises information (815) indicating a location of the pilot content object in the extended box.

6. The system of claim 2, wherein the pilot content object is included in a mutable information box following at least one DCF and the header comprises information indicating a location of the pilot content object in the mutable information box.

7. The system of claim 1, wherein the header is configured using textual headers or DCF extensibility.

8. A package content configuration method for carrying at least one content object, comprising:

   forming a package content (700) containing a target content object (750) and a pilot content object (730) having a specific advertisement data; and
   adding a header (710) indicating positions of the target content object and the pilot content object according to a package content format type.

9. The package content configuration method of claim 8, wherein forming a package content comprises:

   positioning the pilot content object (730) before or after the target content (750) in a content region of the package content; and
   inserting offset information indicating the position of the pilot content object into the header

10. The package content configuration method of claim 8, wherein forming a package content comprises:

    packaging the package content into a multipart Digital Rights Management Content Format (DCF);
    placing the target content object (750) in a content region of a first part (810) of the multipart DCF;
    placing the pilot content object (730) in a content region of a second part of the multipart DCF (820); and
    inserting a pilot content identifier indicating the pilot content object into the header.

**11.** The package content configuration method of claim 8, wherein forming the package content comprises:

forming a box in an extended box (1030) of the package content;
packaging the pilot content object (1035) in the extended box; and
inserting information (1015) indicating the position of the pilot content object in the extended box (1030).

**12.** The package content configuration method of claim 8, wherein forming the package content comprises:

adding a mutable information box (1120) following at least one DCF;
placing the pilot content object (1123) in the mutable information box; and
inserting information indicating a position of the pilot content object into the header (1135).

**13.** The package content configuration method of claim 8, wherein the header is configured using textual headers or DCF extensibility, and includes metadata information related to configuration of the DCF.

**14.** A content playback method of a mobile terminal, comprising:

checking, when a content playback request for playing a content is detected, (1405) whether a header indicating a pilot content object exists in the content;
playing (1419), when a header indicating a pilot content object exists in the content, the pilot content object (730) according to a information on the pilot content object, the information being included in a header (700); and
playing (1429) a target content object (750) using a license generated (1423) while playing the pilot content object.

**15.** The content playback method of claim 14, further comprising playing, when the header indicating a pilot object exists in the content, the content using a give license, wherein the header comprises additional information corresponding to types of the target content object (1405) and the pilot content object.

FIG . 1

# FIG . 2

| 200 | 300 | 400 |
|---|---|---|
| **PACKAGING SERVER** | **MOBILE TERMINAL** | **RI** |

CONTENT REQUEST — 201

CREATE PACKAGE CONTENT — 203
(PILOT CONTENT + TARGET CONTENT)

LICENSE ISSUANCE REQUEST — 205

PACKAGE CONTENT — 207

LICENSE REQUEST — 209

LICENSE — 211

PLAY PILOT CONTENT — 213

DECRYPT PILOT CONTENT — 215

COMPLETE PILOT CONTENT PLAYBACK — 217

GENERATE TARGET CONTENT DECRYPTION KEY — 219

PLAY TARGET CONTENT — 221

# FIG . 3

| 100 | 200 | 300 | 400 |
|-----|-----|-----|-----|
| ADVERTISEMENT SERVER | PACKAGING SERVER | MOBILE TERMINAL | RI |

CONTENT REQUEST —301

CHECK TYPE OF CONTENT —303

EXTRACT PILOT CONTENT —305

ADVERTISEMENT CONTENT REQUEST —307

ADVERTISEMENT CONTENT —309

CONVERT ADVERTISEMENT TO PILOT CONTENT —311

CREATE PACKAGE CONTENT (PILOT CONTENT + TARGET CONTENT) —313

LICENSE ISSUANCE REQUEST —315

PACKAGE CONTENT —317

RECEIVE PACKAGE CONTENT —319

LICENSE REQUEST —321

LICENSE —323

PLAY PACKAGE CONTENT —325

DECRYPT PILOT CONTENT —327

GENERATE DECRYPTION KEY —329

PLAY TARGET CONTENT —331

FIG . 4

START

401 — DETECT CONTENT REQUEST COMMAND

403 — REQUEST PACKAGE CONTENT? —— NO

YES

405

407 — SELECT TARGET CONTENT AND PILOT CONTENT

TRANSMIT TARGET CONTENT

409 — CREATE PACKAGE CONTENT

411 — TRANSMIT PACKAGE CONTENT

END

## FIG . 5

START

501 — DETECT PACKAGE CONTENT REQUEST

503 — PACKAGE CONTENT EXISTS IN DB?

YES →

NO ↓

507 — SEARCH FOR PILOT CONTENT

505 — SELECT PACKAGE CONTENT

509 — PILOT CONTENT EXISTS IN DB?

YES →

NO ↓

513 — REQUEST ADVERTISEMENT SERVER FOR ADVERTISEMENT CONTENT

511 — SELECT PILOT CONTENT

515 — RECEIVED AND CONVERT ADVERTISEMENT

517 — STORE CONTENTS IN DB

519 — PERFORM PACKAGING [PILOT CONTENT + TARGET CONTENT]

521 — CREATE PACKAGE CONTENT

523 — STORE PACKAGE CONTENT

525 — TRANSMIT PACKAGE CONTENT

END

FIG . 6

```
                    ┌─────────────┐
                    │    START    │
                    └─────────────┘
                           │
                           ▼
601 ─┐     ┌──────────────────────────────┐
     │     │  SELECT ADVERTISEMENT CONTENT │
           └──────────────────────────────┘
                           │
                           ▼
603 ─┐     ┌──────────────────────────────┐
     │     │     SELECT ENCRYPTION SCHEME  │
     │     │   FOR ADVERTISEMENT CONTENT   │
           └──────────────────────────────┘
                           │
                           ▼
605 ─┐     ┌──────────────────────────────┐
     │     │     SEGMENT ADVERTISEMENT     │
     │     │       INTO DATA BLOCKS        │
           └──────────────────────────────┘
                           │
                           ▼
607 ─┐     ┌──────────────────────────────┐
     │     │  ASSIGN MILESTONES TO DATA BLOCKS │
     │     │  ACCORDING TO ENCRYPTION SCHEME   │
           └──────────────────────────────┘
                           │
                           ▼
609 ─┐     ┌──────────────────────────────┐
     │     │     GENERATE PARTIAL KEYS      │
           └──────────────────────────────┘
                           │
                           ▼
611 ─┐     ┌──────────────────────────────┐
     │     │ GENERATE TARGET CONTENT ENCRYPTION KEY │
           └──────────────────────────────┘
                           │
                           ▼
613 ─┐     ┌──────────────────────────────┐
     │     │      ENCRYPT TARGET CONTENT    │
     │     │      USING ENCRYPTION KEY      │
           └──────────────────────────────┘
                           │
                           ▼
615 ─┐     ┌──────────────────────────────┐
     │     │ GENERATE PILOT CONTENT ENCRYPTION KEY │
           └──────────────────────────────┘
                           │
                           ▼
617 ─┐     ┌──────────────────────────────┐
     │     │      CREATE PILOT CONTENT      │
           └──────────────────────────────┘
                           │
                           ▼
619 ─┐     ┌──────────────────────────────┐
     │     │      PACKAGE PILOT CONTENT     │
     │     │       AND TARGET CONTENT       │
           └──────────────────────────────┘
                           │
                           ▼
621 ─┐     ┌──────────────────────────────┐
     │     │     CREATE PACKAGE CONTENT     │
           └──────────────────────────────┘
                           │
                           ▼
                    ┌─────────────┐
                    │     END     │
                    └─────────────┘
```

FIG . 7

LICENSE — 770

700

| HEADER | PILOT CONTENT | TARGET CONTENT |

710      730         750

# FIG . 8

| Fixed DCF header | OMA DRM Container | DCF Headers | Common Headers | | User Data | DRM Content | Target Content Object | Pilot Content Object |
|---|---|---|---|---|---|---|---|---|
| | | | | CPM header | | | | |

800 — OMA DRM Container

811 — Common Headers
810 — DCF Headers
813 — User Data
815 — CPM header

821 — Target Content Object
820 — DRM Content
823 — Pilot Content Object

EP 2 214 116 A2

FIG . 9

FIG . 10

EP 2 214 116 A2

FIG . 11

1120 Mutable DRM Info

1121 Right Object

1123 Pilot Content Object

1150 2nd OMA DRM Container

1140 DRM Content

1145 Target Content Object

1130 DCF Headers

1131 Common Headers

1133 User Data

1135 CPM header

1110 OMA DRM Container

# FIG . 12

Pilot content (1210)

Milestones (1220)

Partial keys (1230)

# FIG . 13

START

1301 — DETECTS CONTENT REQUEST

1303 — ACCESS PACKAGING SERVER

1305 — WEB BROWSING

1307 — CONFIGURE CONTENTS
(PILOT CONTENT + TARGET CONTENT)

1309 — DOWNLOAD REQUEST?

NO

1313

PERFORM CORRESPONDING OPERATION

YES

1311 — DOWNLOAD AND SORE CONTENTS

END

FIG . 14

START

1401 — DETECT SPECIFIC CONTENT PLAYBACK REQUEST

1403 — CHECK TYPE OF THE CONTENT

1405 — PACKAGE CONTENT? —NO→ 1407 PLAY DRM CONTENT/NORMAL CONTENT

YES

1409 — SEARCH FOR LICENSE OF (PACKAGE) CONTENT

1411 — LICENSE EXISTS? —NO→ 1413 EXTRACT LICENSE ACQUISITION INFORMATION

YES

1419 — PLAY PILOT CONTENT

1421 — DETECT COMPLETION OF PILOT CONTENT PLAYBACK

1423 — GENERATE TARGET CONTENT DECRYPTION KEY

1425 — CHECK DECRYPTION KEY

1415 — ACCESS RI

ACQUIRE AND STORE LICENSE — 1417

1427 — VALID DECRYPTION KEY? —NO→ 1431 PERFORM CORRESPONDING OPERATION

YES

1429 — PLAY TARGET CONTENT

END

# FIG . 15

START

1501 — PLAY PILOT CONTENT

1503 — DECRYPT PILOT CONTENT

1505 — ACQUIRE PARTIAL KEYS

1507 — STORE PARTIAL KEYS

1509 — PILOT CONTENT PLAYBACK COMPLETE?  NO

YES

1511 — PERFORM DECRYPTION KEY GENERATION ALGORITHM USING PARTIAL KEYS

1513 — ACQUIRE DECRYPTION KEY

END

FIG . 16

```
                        START
                          │
1601 ──   DETECT PACKAGE
          CONTENT PLAYBACK REQUEST
                          │
                          ▼
1603 ──   ◇ DECRYPTION KEY EXISTS? ◇ ──── YES ──────────────┐
                          │                                   │
                          NO                                  ▼
                          │                          1605 ── SKIP PLAYBACK OF PILOT CONTENT
1609 ──   PLAY PILOT CONTENT                                 │
                          │                                   │
                          ▼                                   ▼
1611 ──   DECRYPT PILOT CONTENT            1607 ── PLAY TARGET CONTENT
                          │                                   │
                          ▼                                   ▼
1613 ──   COMPLETE PILOT CONTENT PLAYBACK                    END
                          │
                          ▼
1615 ──   ACQUIRE DECRYPTION KEY
                          │
                          ▼
1617 ──   ◇ VALID DECRYPTION KEY? ◇ ──── NO ────────────────┐
                          │                                   │
                          YES                          1619 ── PERFORM CORRESPONDING
                          │                                    OPERATION
1621 ──   CHECK PLAYBACK
          CONDITION OF PILOT CONTENT
                          │
                          ▼
          ◇ CONDITION SATISFILD? ◇ ── 1623
          YES            │      NO
          │              │
          ▼              ▼
1625 ── PLAY TARGET      UPDATE PLAYBACK INFORMATION ── 1631
        CONTENT                   │
          │                       ▼
1627 ──   │              PLAY TARGET CONTENT ── 1633
          ▼                       │
        COMPLETE TARGET           ▼
        CONTENT PLAYBACK    COMPLETE TARGET CONTENT PLAYBACK ── 1635
          │                       │
          ▼                       ▼
        STORE DECRYPTION KEY    DISCARD DECRYPTION KEY ── 1637
          │                       │
        1629                      │
          └──────────┬───────────┘
                     ▼
                    END
```